(19) Europäisches Patentamt
European Patent Office
Office européen des brevets

(11) EP 4 345 929 A1

(12) EUROPEAN PATENT APPLICATION

(43) Date of publication:
**03.04.2024 Bulletin 2024/14**

(21) Application number: **22199267.0**

(22) Date of filing: **30.09.2022**

(51) International Patent Classification (IPC):
***H01M 4/04*** *(2006.01)* ***H01M 4/131*** *(2010.01)*
***H01M 4/1391*** *(2010.01)* ***H01M 4/36*** *(2006.01)*
***H01M 4/485*** *(2010.01)* ***H01M 4/505*** *(2010.01)*
***H01M 4/525*** *(2010.01)* ***H01M 4/62*** *(2006.01)*
***H01M 10/0525*** *(2010.01)* ***H01M 10/0562*** *(2010.01)*
***H01M 10/0565*** *(2010.01)* ***H01M 10/0568*** *(2010.01)*
***H01M 10/0569*** *(2010.01)*

(52) Cooperative Patent Classification (CPC):
**H01M 4/366; H01M 4/0419; H01M 4/131; H01M 4/1391; H01M 4/485; H01M 4/505; H01M 4/525; H01M 4/62; H01M 4/625; H01M 10/0525; H01M 10/0562; H01M 10/0565; H01M 10/0568; H01M 10/0569;** H01M 2300/0025;

(Cont.)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Justus-Liebig-Universität Gießen**
**35390 Gießen (DE)**

(72) Inventors:
- **Richter, Felix**
**35392 Gießen (DE)**
- **Bing-Xuan, Shi**
**35392 Gießen (DE)**
- **Sen, Sudeshna**
**35392 Gießen (DE)**

(74) Representative: **Stumpf, Peter**
**c/o TransMIT GmbH**
**Kerkrader Strasse 3**
**35394 Gießen (DE)**

# (54) POLYMER-COATED ELECTRODE ACTIVE MATERIAL, ITS MANUFACTURING AND USAGE

(57) The invention provides a coated particulate material comprising a plurality of core particles, whereat each core particle comprises at least one compound of formula (I), $Li[Ni_{1-x-y-z}Co_xMn_yM_z]O_2$ (I) , and the surfaces of the core particles exhibit a coating comprising at least one polycationic organic polymer.

EP 4 345 929 A1

(52) Cooperative Patent Classification (CPC): (Cont.)
H01M 2300/0034; H01M 2300/0037;
H01M 2300/0045; H01M 2300/0068;
H01M 2300/008; H01M 2300/0082;
H01M 2300/0091

## Description

The invention relates to polymer-coated electrode active materials, especially polymer-coated cathode active materials of type NCM, being used for improving the cycling stability of the electrode active material within electronic devices as, for example, batteries. The invention also relates to the manufacturing of the polymer-coated electrode active material and ist usage. The preferred usage of the polymer-coated electrode active material is its application as electrode active material within lithium ion batteries (lithium ion electrochemical cells), most preferably within solid-state lithium ion batteries (also called solid-state lithium ion electrochemical cells).

## Description

### Background of the technology

Thiophosphate-based solid-state batteries (SSBs), especially solid-state lithium ion batteries, resp. solid-state lithium ion electrochemical cells, with high-nickel ternary cathode materials $LiNi_{1-x-y}Co_xMn_yO_2$ (NCMs) represent a promising next-generation energy storage technology due to their expected high specific discharge capacity and improved safety. However, a significant problem that needs to be overcome on the way to large-scale high energy-density applications is rapid capacity fading during cycling of the cell. Typically, interphase and crack formation during cycling of NCM cause contact loss and length increase of the lithium diffusion pathway. Herein, a uniform polymer-coating on NCM is obtained from a spray-drying process. This coating, which may be - for example - 4 nm thick, stabilizes the interface between electrode active material, e.g. NCM, and the solid electrolyte (SE), e.g. $Li_6PS_5Cl$. Electrochemical evaluations exemplarily provided herein confirm a significant improvement in long-term cycling performance and active mass utilization compared to uncoated NCM. Thereby, the coating effectively suppresses degradation of the NCM/SE interface, in particular the formation of oxygenated species. Furthermore, the polymer-coating (for example by usage of poly((4-vinyl benzyl)trimethylammonium bis(trifluoromethanesulfonylimide)), PVBTA-TFSI) reduces the extent of particle cracking. Overall, the experimental results provide by way of example a scalable process with a new polycation coating on NCMs for next-generation SSBs.

Solid-state lithium batteries (SSBs) use solid electrolytes (SE) instead of organic liquid electrolytes, which are expected to fundamentally solve battery safety problems and are ideal chemical power sources for electric vehicles and large-scale energy storage. In order to achieve higher energy density, intercalation-type cathode active materials and thiophosphate-based SEs have drawn much attention. High-nickel ternary cathode material $LiNi_{1-x-y}Co_xMn_yO_2$ (NCM) is considered a promising lithium battery cathode material due to its high energy density and low cost. However, severe capacity fading caused by interfacial degradation is observed when NCM and thiophosphate-based SEs are employed. In general, the interfacial degradation reactions between NCM and SE give rise to the adverse interfacial layer interfering with lithium ion and electron transport. Even at 0 state of charge, chemical reactions happen at the NCM/SE interface, causing detrimental capacity fading.

During the charging process in the first cycle, the electrochemical degradation of the interface with the solid electrolyte slows lithium transport due to the low electrochemical stability window of thiophosphate-based SEs. However, the discharge process often reaches 2.6 V vs. $Li^+/Li$, which is not low enough for triggering reduction. Hence, oxidation of the SE is much slower in subsequent cycles. Since the thiophosphate-based SE directly contacts the NCM, the oxygen and lithium atoms in the surface region of the NCM undergo side reactions with the electrolyte, bringing about structural degradation on the surface of NCM and the passivation layer between NCM and SE. Oxygenated species like $SO_x^{n-}$ and $PO_x^{n-}$ can be detected by time-of-flight secondary ion mass spectrometry (ToF-SIMS) at the NCM/SE interface, and $SO_2$ can be detected by differential electrochemical mass spectrometry during cycling. Oxygen loss causes mechanical cracking and plays an important role in interface degradation. On the other hand, the lattice contraction and expansion of NCMs contribute to capacity fading, however, SSBs have even more adverse effects than lithium-ion batteries (LIBs) due to the contact loss between SE and cathode materials. Consequently, research efforts are devoted to improving the stability of the electrode-electrolyte interface, but heretofore without success.

To enhance the interfacial stability between NCM and thiophosphate-based SE, surface modification by coating on NCM has been studied considerably. In general, wet coating and dry coating processes can hardly have a thin and homogeneous coating layer compared to atomic layer deposition. As a result, atomic layer deposition such as $HfO_2$ coated-NCM has also been studied. Many research efforts focus on inorganic oxides as coating materials, such as $LiNbO_3$, $Li_6ZnNb_4O_{14}$, $LiAlO_2$, $Li_2ZrO_3$, $Li_4Ti_5O_{12}$, and $Li_3B_{11}O_{18}$. Such inorganic coatings are hard and brittle, so that they are prone to breaking upon being exposed to mechanical stress due to - for example - cyclic charging and discharging processes of batteries. Therefore, it is impossible to provide an inorganic coating that is reliably completely covering the surface of an active electrode material which is enduring mechanical stress. Compared with inorganic coatings, polymer coatings are relatively soft and can cover the substrate evenly if there is a force between the functional group and NCM; for instance, polyvinylpyrrolidone (PVP) can act as a surfactant modifying the surface of metal oxide. Although poly(3,4-ethylenedioxythiophene) modification on NCM and carbon additives in SSBs via molecular layer deposition has been studied, polymer-coated NCMs are mostly only adopted in Li-ion batteries with liquid electrolytes up to date. Heretofore it was unknown and unexpected that polymer coatings of NCMs can be combined with solid electrolytes, especially with thiophosphate-based solid electrolytes. The heretofore unadressed and unsolved problem of polymer coating of NCM with polyelectrolyte polymers is that the coating of NCM with polyelectrolyte polymers requires solvent stability with NCM, meaning that the solvent applied within the coating process for solving the polyelectrolyte polymer must not dissolve (extract) the $Li^+$-ions out of NCM.

Especially contact with water must be excluded in handling NCM. However, cationic polymers like PVBTA-CL and LiTFSI can only be dissolved in water or other polar organic solvents, which are not stable with NCM. On the other hand, after ion exchange of PVBTA-Cl to form PVBTA-LiTFSI, PVBTA-TFSI surprisingly can be dissolved in acetone instead of water. The solution of PVBTA-TFSI in acetone is stable with NCM and easy to manipulate by the spray drying process. Through this novel and heretofore unusual approach we have managed to coat the NCM with the polymer without affecting NCM stability. It is obvious to any person of ordinary skill in the art that these results, acquired herein by example of PVBTA-TFSI in combination with NCM, can also be applied to other polycationic polymers in combination with other cathode active materials (e.g. NCA) without leaving the scope of the invention.

Additionally (as is obvious to the person of ordinary skill in the art), the invention is not only applicable with solid electrolytes, but also with liquid electrolytes and polymer electrolytes. In all cases, mechanical degradation of the NCM causes particle fracture during cycling and our coating helps mitigating this degradation mechanism. Therefore, our invention can be applied advantageously to all batteries using any type of electrolyte without leaving the scope of the invention.

**Content of the invention**

An objective of the present invention is to provide polymer-coated electrode active materials which can be prepared easily and with low cost, and which exhibit extraordinary high cycling stability in electronic devices like batteries.

The high cycling stability is - for example - preferably proven and defined by the reduced formation of phosphates ($PO_x^-$) and/or sulfates/sulfites ($SO_x^-$) as known species of the decomposition of thiophosphate-based solid electrolytes in solid-state lithium ion electrochemical cells. The high cycling stability is also proven by the finding that pristine NCM cells show more fracturing/cracking within, resp. between, the (sintered) NCMparticles than cells, being prepared with coated NCM particles.

Electrode active material, as is understood herein, comprises cathode active material as well as anode active material. Cathode active material is the preferred electrode active material and amongst cathode active material high-nickel ternary cathode materials $LiNi_{1-x-y}Co_xMn_yO_2$ (NCM) are the most preferred electrode active materials.

Thiophosphate based solid electrolytes according to the invention are thiophosphates of argyrodite type, for example $Li_6PS_5Cl$ (LPSCl) and thiophosphates of type $Li_{7+o-p}M^{IV}{}_oM^V{}_{1-o}Ch_{6-p}X_p$, with $M^{IV}$ = Si, Ge, Sn; $M^V$ = P, Sb; Ch = O, S, Se; X = Cl, Br, I, $BH_4$ and $0 \leq o \leq 1$; $0 \leq p \leq 2$. Besides thiophosphate based solid electrolytes also other solid electrolytes can be used without leaving the scope of the invention, for example such ones of NaSICON type, like for example $Li_{1+x}Al_xTi_{2-x}(PO_4)_3$ (LATP), garnet type, like for example $Li_7La_3Zr_2O_{12}$ (LLZO), perovskite type, like for example $Li_{3x}La_{2/3x}TiO_3$(LLTO), LGPS-type, like for example $Li_{10}GeP_2S_{12}$.

Surprisingly, it was found that the polymer-coating of the active electrode material according to the invention is efficiently reducing the formation of oxygenated species like for example $SO_x^{n-}$ and $PO_x^{n-}$, in - for example - thiophosphate based solid electrolytes, resp. on the surface of - for example - NCM, and by doing so is effectively enhancing cycling stability of the active electrode material to a great extent.

Therefore, in order to achieve the above objective, the present invention provides a polymer coating for active electrode materials and active electrode materials bearing this polymer coating as well as their usage in electronic devices, e.g. batteries, especially solid-state lithium ion batteries, resp. solid-state lithium ion electrochemical cells.

The polymer coating revealed herein is especially useful for coating NCM which is to be applied together with thiophosphate-based solid electrolytes in solid-state lithium ion batteries / solid-state lithium ion electrochemical cells. In other embodiments the polymer-coating revealed herein is also useful for coating - for example - NCM which is to be applied together with a liquid electrolyte or a polymer electrolyte in lithium ion batteries. In conjunction with liquid electrolytes, unlike inorganic coatings, the polymer coating can show swelling with liquid electrolyte, reducing the battery's resistance and increasing the storage capacity. Some polymers, which have specific functional groups, for example poly(ethylene carbonate, can even increase the lithium transport number. Equally, polymer electrolytes are more compatible with polymer coating than inorganic coating.

In order to have a homogeneous coating, the invention revealed herein teaches to use spray drying of a polyelectrolyte solution for coating an active electrode material, especially NCM materials. Spray drying can be classified as the category of wet coating methods applied in industry. Additionally, as polyelectrolyte can easily absorb on metal oxide due to electrostatic interactions, poly((4-vinyl benzyl)trimethylammonium bis(trifluoromethanesulfonylimide)) (PVBTA-TFSI) is adopted as an example of a coating material for NCM according to the invention herein, this example being understood not to confine the scope of the invention. PVBTA-TFSI is homogeneously coated on the surface of NCM and significantly improves the cycling performance of PVBTA-TFSI-coated NCM battery cells compared to pristine NCM cells. Without being bound to a certain theory, herein the key physical phenomena, such as contact loss, electrochemically inactive interfacial layer and lithium diffusion pathway are also described in detail by discussing the exemplarily applied cathode composite material and the electrochemical performance results.

Overall, the comparison of oxidative decomposition products by ToF-SIMS confirms that polymer coating, for example using PVBTA-TFSI, significantly improves the interfacial stability at the CAM/SSE interface, which is in good agreement with the electrochemical data shown herein. PVBTA-TFSI has been synthesized as an exemplary polymer according to the invention by free radical polymerization and used for NCM coating by spray drying, which is a scalable and controllable process. TEM and Tof-SIMS show that 1 wt% polymer has a homogeneous coating around 4 nm thickness. In terms of electrochemical analysis, the exemplary PVBTA-TFSI coating on the surface of NCM improves the cycling stability of thiophosphate-based SSBs. Correspondingly, EIS and active mass calculations clarify that the polymer coating reduces interfacial degradation. In addition, Tof-SIMS confirms electrochemical data by showing less oxygenated species formed on the interface of polymer-coated NCM. On the other hand, FIB-SEM corroborates the GITT and lithium diffusion length calculation that the particle cracking within NCM has been mitigated by the polymer coating. Overall, polymer coatings, e.g. PVBTA-TFSI, increase cycle stability by reducing mechanical degradation and thereby acts as a protective layer to reduce interface degradation.

## Detailed embodiments of the invention

A person of ordinary skill in the art well knows that whenever a range of values (e.g. time, temperature, particle size, concentration, BET specific surface area etc.) is given, not only the explicitely named range is meant, but all other sub-ranges within the explicitely named range are also contemplated and are implicitely revealed within the present disclosure.

### Exemplarily used Reagents and materials

(Vinylbenzyl)trimethylammonium chloride (VBTA-Cl) monomer, reagent grade sodium persulfate ($Na_2S_2O_8$) initiator, lithium bis(trifluoromethanesulfonyl)imide (LiTFSI), and vapor-grown carbon fibers (VGCF) are purchased from Sigma-Aldrich. Single crystal high nickel NCM83 ($LiNi_{0.83}Mn_{0.06}Co_{0.11}O_2$) is purchased from MSE Supplies (Particle size around 3-5 $\mu$m, and BET specific surface area around 0.5 - 0.9 $m^2/g$). $Li_6PS_5Cl$ (LPSCl) is purchased from NEI Corporation. Indium foil is purchased from chemPUR GmbH with 100 $\mu$m thickness and punched into a circular electrode of 9 mm in diameter. Lithium foil is purchased from Albemarle Rockwood Lithium GmbH with 125 $\mu$m thickness and punched into a circular electrode of 6 mm in diameter.

### Exemplary Synthesis of PVBTA-TFSI

Poly(vinylbenzyl)trimethylammonium bis(trifluoromethanesulfonyl)imide (PVBTA-TFSI) is synthesized through the route shown in Fig. 1. Firstly, free radical polymerization is conducted by mixing 5 g vinyl benzyl trimethylammonium chloride (VBTA-Cl) and 0.3 ml of saturated $Na_2S_2O_8$ solution in 20 ml of deionized water and then heated up and purged with $N_2$ flow at 75 °C for 48 hours (molar ratio of VBTA-Cl:$Na_2S_2O_8$ = 1:0.3). After polymerization, PVBTA-Cl is purified by dialysis with a considerable amount of deionized water and further condensed by a rotary evaporator. The condensed polymer solution is then added dropwise to the LiTFSI solution (7.5 g LiTFSI dissolved in 20 g deionized water) and stirred overnight for ion exchange. Once the PVBTA-Cl drops into the LiTFSI solution, the PVBTA-TFSI precipitates immediately. After the ion exchange reaction, PVBTA-TFSI is washed with deionized water by centrifuge three times to remove the residual LiTFSI and separate the PVBTA-TFSI solid. Afterwards, the PVBTA-TFSI is dried in a vacuum oven at 80 °C for 72 hours and then stored in the glove box. $^1$H NMR (400 MHz, deuterated acetone): $\delta$ 1.36-1.99 (H1, H2), $\delta$ 2.05 (acetone-d6), $\delta$ 3.14 (H6), $\delta$ 4.4-4.9 (H5), $\delta$ 6.5-7.4 (H3, H4). FT-IR of PVBTA-TFSI ($cm^{-1}$): 973 (C-N stretching), 1346, 1326, 1176, 1132, 1050 ($TFSI^-$), 1612, 1480, 1422 (aromatic C=C stretching), 3043, 2922, 2852 (alkyl C-H stretching), 3400 (H2O). FT-IR of PVBTA-Cl ($cm^{-1}$): 973 (C-N stretching), 1612, 1480, 1422 (aromatic C=C stretching), 3015, 2922, 2852 (alkyl C-H stretching), 3400 (H2O). FT-IR of LiTFSI ($cm^{-1}$): 1327 ($SO_2$ asymmetric stretching), 1245 ($CF_3$ symmetric stretching), 1204 ($CF_3$ asymmetric stretching), 1147 ($SO_2$ symmetric stretching), 1065 (asymmetric $S_2N$ stretching).

### Exemplary preparation of PVBTA-TFSI coated NCM

Mini Spray Dryer B-290 from BUCHI is used to coat PVBTA-TFSI on NCM, as shown in Fig. 1. 0.1 g (5 wt% compared to NCM) or 0.02 g (1 wt% compared to NCM) of polymer is mixed with 2 g of NCM and 30 g acetone as the precursor. The mixing step is conducted by vigorous stirring and takes about 1 hour to make sure the particle aggregation is broken into a smaller size. The inlet temperature is 150 °C, the volume flow (i. e. suction of vacuum pump) is 37 $m^3$/hour, the feed rate of polymer solution is 8 mL/min, and the $N_2$ flow is 40 L/min. The spray drying condition has been optimized to get the highest productivity around 50 to 70 wt%. Besides, the 5 wt% polymer-coated NCM and 1 wt% polymer-coated NCM are noted as 5P-NCM and 1P-NCM, respectively. In addition, the 5 wt% PVP-coated NCM follows the same steps above but with ethanol as a solvent.

**X-ray diffraction (XRD)**

XRD is used to characterize PVBTA-TFSI and check the chemical stability between PVBTA-TFSI or LiTFSI and LPSCl by using Panalytical Empyrean XRD with Cu K$\alpha$ radiation. Diffraction patterns are collected in a 2$\theta$ angular range from 10° to 85° with a step size of 0.026°, 0.04 rad. soller slits, and 1/2° anti-scatter slit. To check the chemical stability between PVBTA-TFSI or LiTFSI with LPSCl, PVBTA-TFSI or LiTFSI are mixed with LPSCl in a weight ratio of 1:1 (around 500 mg in total) by grinding in the agate mortar and then pressed into pellets (8 mm in diameter). After that, the pellets are heated up and maintained at 80 °C for 24 hours, followed by a grinding process in the agate mortar to turn pellets into powder. Finally, the powder after heating is characterized by XRD.

**Thermogravimetric analysis (TGA)**

TGA measurements are conducted with around 20 mg of samples by STA 409 PC (Netzsch-Gerätebau GmbH) at the temperature ranging from 25 °C to 1000 °C, under Air/$O_2$ with a heating rate of 10 °C/sec.

**1H Nuclear magnetic resonance (1H NMR)**

Bruker Avance II records the $^1$H NMR spectra of PVBTA-TFSI at 400 MHz in deuterated acetone.

**Fourier-transform infrared spectroscopy (FT-IR)**

FT-IR spectra of PVBTA-TFSI, PVBTA-Cl, and LiTFSI are recorded with a total number of 96 scans on an ATR-FTIR Thermo Fischer Scientific iD5 ATR spectrometer (550 to 4000 cm-1). To check the chemical stability between PVBTA-TFSI or LiTFSI with LPSCl, PVBTA-TFSI or LiTFSI is mixed with LPSCl in the agate mortar and then pressed pellets. Subsequently, the pellets are heated up and maintained at 80 °C for 24 hours. FT-IR spectra are measured in a pellet form before and after the heating process.

**Brunauer-Emmett-Teller analysis (BET)**

Specific surface area calculations of polymer-coated and pristine NCMs are measured by the BET method. Before measurements, the samples are evacuated at 120 °C for 12 hours in standard glass tubes. BET measurements are then performed at an automated gas adsorption station (Autosorb-1-MP, Quantachrome Instruments) at 77 K maintained by liquid nitrogen in standard cryostats.

**Scanning electron microscopy (SEM)**

SEM (Merlin, Zeiss) at an accelerating voltage of 3 kV and accelerating current of 200 pA is adopted to characterize the morphology of NCMs. Back-scattered electron images and secondary-electron SEM images are taken by SEM. For sample preparation, polymer coatings and pristine NCMs are measured in a powder form, sticking tightly on the conductive carbon tape.

**Focused-ion beam scanning electron microscopy (FIB-SEM)**

The cross-section of coated and pristine NCM powders and cathode composites pellets are analyzed using a XEIA Xe-plasma FIB (TESCAN). For sample preparation, FIB craters are milled in a low-angle condition with a 1 nA Xe-ion beam without any polished step under - 135 °C maintained by liquid nitrogen. After that, back-scattered electron images and secondary-electron SEM images are taken at an acceleration voltage of 3 kV and acceleration current of 200 pA.

## Energy-dispersive X-ray spectroscopy (EDS)

After SEM or FIB-SEM measurement, energy-dispersive X-ray spectroscopy (X-Max-Extreme detector, Oxford Instruments) is adopted to characterize the coating layer on NCM. However, to get more precise signals from the EDS, the accelerating voltage and current are raised to 5 kV and 2 nA, respectively. Besides, the working distance is controlled at 5.5-5.6 mm. Analyzed elements are carbon and sulfur.

## Transmission electron microscopy (TEM)

The TEM images are bright field images in order to provide maximum contrast between inorganic core of the electrode active material and organic coating. The way how to make such images is well known within the state of the art, so that it need not be described herein. The TEM equipment used is a TVIPS TEMCam XF416FS camera, mounted on a JEOL JEM-3010 microscope, and run at 300 kV acceleration voltage.

## Time-of-flight secondary ion mass spectrometry (ToF-SIMS)

The technology of ToF-SIMS is well known within the state of the art, so that it need not be described herein. The equipment used is a M6 Hybrid SIMS (IONTOF GmbH), in combination with a 30 kV Bi-cluster primary ion gun for analysis and a 5 kV Ar-gas cluster source (GCIB) for depth profiling (sputtering). The samples are prepared in a glovebox and transferred into the measurement-chamber by use of the LEICA EM VCT500 shuttle (Leica Microsystems). Evaluation tool for the ToF-SIMS data is the software package SurfaceLab 7.2 (IONTOF GmbH).

## Electrode composite and cell assembly

All of the cell tests are performed with a pellet-type cell casing. Firstly, 60 mg of LPSCI are pressed into a pellet within the peek cylinder insulator. Next, the cathode composite is made by mixing 70 wt% of pristine or coated NCM, 30 wt% of LPSCI, and an additional 1 wt% of VGCF in an agate mortar for around 20 minutes. Then the 12 mg cathode composite is pressed on one side of the electrolyte. Finally, indium (100 $\mu$m thickness and 9 mm in diameter) and lithium foils (125 $\mu$m thickness and 6 mm in diameter) are pressed on the other side as the anode. After assembling the whole stack of the cell is pressed under 30 kN for 3 minutes, resulting in around 400 $\mu$m solid-state electrolyte with around 30 $\mu$m cathode composite. Before electrochemical analysis, the whole cell is analyzed under an external aluminum framework (-50 MPa).

## Electrochemical analysis

Batteries are charged and discharged within the voltage window between 2.0 and 3.7 V (vs. $Li^+$/Li-In) at 25 °C for cycling stability, chronoamperometry (CA), and electrochemical impedance spectroscopy (EIS). The cycling stability is performed at MACCOR electrochemical workstation. Besides, EIS and CA are conducted by VMP-300 (BioLogic) electrochemical workstation. The whole procedure is also predicted in Fig. 2. The cycling test adopts two different currents, 0.1C and 0.25C; however, the EIS measurements are conducted at 0.1C. Initially, batteries are charged to 3.15 V (vs. $Li^+$/Li-In), and then CA is maintained at 3.15 V (vs. $Li^+$/Li-In) until the current drops to less than 1%. After that, EIS is measured right after CA at 3.15 V (vs. $Li^+$/Li-In) from 1 MHz to 100 $\mu$Hz. The sinusoidal amplitudes of EIS are applied as 10 mV for 1 MHz to 10 mHz; 5 mV for 10 mHz to 1 mHz; and 3 mV for 1 mHz to 100 $\mu$Hz. The 0.25C cycle stability runs 200 cycles, and the impedance is measured at the first, second, 53rd, 104th, 155th, and 206th cycles under 0.1C at 3.15 V, as is exemplarily shown in Fig. 3. The 0.1C cycle stability runs for 100 cycles, and the impedance is measured at first to fifth, 10th, 30th, 50th, and 100th cycles under 0.1C at 3.15 V, as shown in Fig. 4 (a). The procedure of how to perform the fitting of the impedance is well known by any person of ordinary skill in the art. The low-frequency part is fitted by the finite-space Warburg behavior ($Z_{fs}$) with the function described in the further section. The galvanostatic intermittent titration technique (GITT) coupled with EIS is measured at VMP-300 (BioLogic) electrochemical workstation to determine the diffusion coefficient after 0.1C over 100 cycles. Coated NCM cells and pristine NCM cells are charged or discharged every 20 minutes, followed by 2 hours of relaxation after every charging or discharging pulse to record open-circuit voltage (*Voc*). EIS is applied after every relaxation in the range of frequency from 1 MHz to 1 mHz with a sinusoidal amplitude of 10 mV.

## Characterization of PVBTA-TFSI coated NCM

Polyelectrolytes, e.g. PVBTA-TFSI, have affinity to inorganic surfaces and exert electrostatic effect with metal-oxide surface, implying the potential of polyelectrolytes as a promising coating material for inorganic substrates. As a result, PVBTA-TFSI is used as an exemplary coating material within the subject matter of the invention, for it is surprisingly chemically stable and therefore compatible with thiophosphate-based solid electrolytes, like - for example - LPSCL. However, as the normal wet-coating method often gives a nonhomogeneous coating on the surface of particles, the spray-coating method is introduced herein due to its possibility of obtaining a homogeneous coating on NCM. Fig. 1 exemplarily shows a schematic illustration from polymer synthesis and the spray coating process using NCM/PVBTA-TFSI/acetone as the precursor. The precursor is heated to a temperature (e.g. 150 °C) much higher than the boiling point of the solvent, e.g. acetone, and sprayed out the nozzle. The coating process is then carried out during the drying process in the drying chamber. Finally, the dried powder is collected in the collecting chamber by the vacuum pump. The spray-drying method can usually obtain two different kinds of coated products, depending on the particle size. First, if particles are smaller than the drops sprayed out, the particles can be enclosed in the droplets, forming a uniform coating. Second, if particles are bigger than the droplets, there will be many exposed parts on the surface of the particles after drying. By using Mini Spray Dryer B-290 from BUCHI, a drop of the solution is around 25 $\mu$m, much bigger than the NCM particles (around 3 $\mu$m to 5 $\mu$m). Thus, according to the invention a uniform coating is achieved and mostly preferred. Nevertheless a non uniform coating exerting local deviations from the average value of thickness is also comprised by the scope of the invention.

The structure of PVBTA-TFSI is confirmed by 1H NMR spectroscopy and thoroughly matches the $^1$H NMR spectra of the literature, as is shown in Fig. 5. After the polymerization and ion-exchange process, the chemical shift of the double bonds ($^1$H NMR: $\delta$= 6.71 ppm, 5.82 ppm, and 5.26 ppm in the $^1$H NMR spectra) completely disappears in the PVBTA-TFSI spectra; instead, the new proton absorption peak appears at $\delta$ of 1.5 ppm, indicating that the polymerization has completed. Moreover, the aromatic protons (H3,4), benzylic protons (H5), and the protons of trimethylammonium cations (H6) still exist in the PVBTA-TFSI spectra, indicating that the polymer backbone structure is stable after anion exchange. Fig. 6 shows the IR spectra of PVBTA-Cl, and PVBTA-TFSI after anion exchange. Compared to PVBTA-Cl, PVBTA-TFSI shows new characteristic bands at 1346 $cm^{-1}$, 1176 $cm^{-1}$, 1132 $cm^{-1}$, and 1050 $cm^{-1}$, corresponding to asymmetric $SO_2$ stretching, $CF_3$ asymmetric stretching, symmetric $SO_2$ stretching, and asymmetric S-N-S stretching, respectively. These new peaks in the PVBTA-TFSI spectrum are attributed to TFSI anionic groups, demonstrating successful anion exchange. XRD is utilized to measure if there is any crystalline phase from LiTFSI, as shown in Fig. 7. It can be seen that PVBTA-TFSI only shows a broad, amorphous peak at around 20°, indicating that the PVBTA-TFSI is an amorphous polymer without any LiTFSI separated out. The chemical stability between NCM and LPSCI is investigated by heating LPSCI and PVBTATFSI at 80 °C for 24 h, and then the samples are examined by XRD and FT-IR measurements before and after heating, as shown in Fig. 8A (FTIR) and Fig. 8B (XRD). The result confirms that PVBTA-TFSI is chemically stable with LPSCI. Furthermore, the thermal stability of PVBTA-TFSI is measured by TGA, as shown in Fig. 9. The decomposition temperature of PVBTA-TFSI is around 365 °C, and most of the decomposition happens around 400 °C to 600 °C, which is much higher than the temperature (150 °C) applied for coating.

The specific surface area of coated and pristine NCM are evaluated using the Brunauer-Emmett-Teller (BET) model. Pristine NCM, 5P-NCM, and 1P-NCM have a surface area of, for example, 0.593 $m^2/g$, 0.291 $m^2/g$, and 0.412 $m^2/g$, respectively. Although SEM can hardly tell the difference in particle aggregation between pristine and polymer-coated NCM, BET measurement demonstrates that the surface area decreases when the coating weight percent becomes higher. This may be because the polymer makes the agglomeration severe. TEM is recorded in bright field TEM image to enhance contrast between the coating layer and the NCM particles. Regarding one example of the invention (presented in Fig. 10), it is confirmed that all observed particles are uniformly covered by a homogenous coating layer with only small deviations in thickness, as shown in Fig. 10 ((a) - pristine NCM, (b) - 1P-NCM, (c) - 5P-NCM). The 1P-NCM has a uniform coating of around 4 nm, while the 5P-NCM has a much thicker coating layer of around 10 nm.

In order to characterize the coating composition and distribution even more precisely, ToF-SIMS is carried out as a surface sensitive technique harnessing its high lateral resolution (below 50 nm). To chemically identify the coating on the NCM particle structure, pressed PVBTA-TFSI powder is measured as a reference material. Because of the collision cascade initiated by the highly energetic analysis beam charged fragments such as $CH_2OF^-$, $SNO^-$and $CF_3^-$ are formed during the ToF-SIMS measurement with a decent signal intensity. These fragments are also formed at the coated samples, confirming that the PVBTA-TFSI coating is present on the NCM particles.

Overall, taking the SEM, TEM and ToF-SIMS results into account, the PVBTA-TFSI coating microstructure can be defined as follows: The coating is uniformly distributed and completely covering the NCM particles. While the 1 wt% coating is about 4 nm thick, the 5 wt% coating is thicker (about 10 nm). In certain embodiments the coating has local polymer aggregation with a thickness of, for example, 40 to 100 nm on the surface (observed at the example of the 5 wt%-coating with 10 nm thickness; any person of ordinary knowledge in the art well knows that the local polymer aggregations will vary with the value of average thickness and be of corresponding size). Based on these analytical results, both, 1 wt% and 5 wt% coatings, are effectively preventing the direct physical contact between CAM and SSE and are consequently stabilizing the interface.

## Electrochemical Characterization

### Rate capability test

The performance of coated cathode is defined and evaluated by rate capability and cycling stability in comparison to pristine NCM. Different C-rate performances are investigated to elucidate the rate capability, as shown in Fig. 11 (a). Initially, PVBTA-TFSI coated NCM do not perform better than pristine NCM. However, at 0.5C and 1C rates, 1 wt% coated NCM shows better performance and the 5 wt% coated NCM cell has the same capacity as the pristine NCM cell. Without being bound by a certain theory, the better rate capability of 1 wt% coated NCM at 0.5C and 1C rates may be due to the protection of polymer coating after several cycles. Besides, at the 25$^{th}$ cycle, the coated NCM shows better reversibility in the discharge process, as shown in Fig. 12 (b). Fig. 11 (b) magnifies the galvanostatic charging and discharging profile from 2 V to 3 V (vs. $Li^+$/Li-In) in differential form for the first charge cycle. The current decreases as the polymer content increases. This demonstrates that the polymer is protecting the electrode from the electrochemical degradation of the unstable interface between electrode and electrolyte, and this effect majorly occurs in the first cycle. However, the protective layer gives rise to a larger overpotential at around 3 V (vs. $Li^+$/Li-In) for the coated cells compared to the pristine cell in the first cycle, as shown in Fig. 12 (a).

In order to observe the effect of the PVBTA-TFSI coating layer on battery performance, 5P-NCM, 1P-NCM, and pristine NCM cells are galvanostatically cycled at 0.1C (Fig. 4 (a)) and 0.25C (Fig. 4 (d)), respectively. During the cycling, the EIS test is performed at 3.15 V (vs. $Li^+$/Li-In) under the current of 0.1C at specific cycles. The potential of 3.15 V (vs. $Li^+$/Li-In) is chosen to ensure a sufficiently high lithium diffusion coefficient and lowest charge transfer resistance ($R_{ct}$) while avoiding significant degradation during the measurement. Moreover, the impedance of the layered oxide cathode material depends on the electrode's state of charge, so it is necessary to measure the impedance at a fixed potential. To ensure that the impedance can be measured at a sufficiently steady state, the CA is used right before the EIS measurement. The cell voltage is stabilized at 3.15 V (vs. $Li^+$/Li-In) until the current drops to less than 1%. This allows Li+ diffusing into the CAM particles to balance lithium concentration within the NCM particles. Besides, 2 hours of relaxation time is used to record $V_{oc}$ after every charging and discharging process to calculate the active mass.

For the 0.1C cycling performance (Fig. 4 (a)), it is shown that the capacity retention of 1P-NCM is the highest at about 86%, while that of 5P-NCM is about 75.3%. However, the capacity retention of pristine NCM is only around 70.4%. These results match 0.25C cycling performance (Fig. 4 (d)) and confirm that 1P-NCM significantly improves the long-term cycling stability of NCM in SSBs. However, not all polymers can be used as a protective layer while maintaining a high capacity around 180 mAh/g. Without being confined to a certain theory, probably, the intermolecular interactions and interactions with the cathode material need to be strong. Also, the counterion $TFSI^-$ to the polycation likely helps with lithium ion conduction through the thin coating layer, which does not intrinsically contain lithium, but may obtain a small amount of lithium ions for lithium ion conduction from either the electrolyte or the cathode material. Therefore, it is comprised by the scope of the invention that the polyelectrolyte polymer is a polycationic polymer, a polyanionic polymer, a zwitterionic polymer, a polymer being a polycation being complexed with a polyanion or a mixture of any two or more of the named polyelectrolyte polymers. The range of lithium ionic conductivity being usable in the polymer coating according to the invention is very broad, for the thickness of the polymer coating is very small, preferably below 100 nm, so that even a low ionic conductivity is not a disadvantage.

Without being bound to a certain theory, improved cycling performance of SSB, being caused by the invention, can be due to multiple reasons. Firstly, the mitigation of the contact loss and the electrochemically inactive interfacial layer between the active material and the electrolyte can better utilize the active mass (actual amount of active materials that have been utilized) of the cathode material. Interface decomposition between the active material and the electrolyte includes the chemical, electrochemical, and chemo-mechanical degradation. The Interface decomposition may form an electrochemically inactive surface or a high resistance layer. Besides, the electrochemically inactive surface layers and the chemo-mechanical contraction can cause a loss of contact between the NCM and the solid electrolyte, leading to increased $R_{ct}$ in the impedance spectrum. The other reason for the improvement being achieved by the invention could be alleviating the increased length of the lithium diffusion pathway. Lithium diffusion pathway length may increase due to particle cracking caused by the volume change, contact loss and interface decomposition listed above.

### Contact loss and electrochemically inactive interfacial layer

In order to quantify and analyze the contact loss and electrochemically inactive cathode/electrolyte interfacial layer, active mass in operating cells is measured by using a method which is well known to any person of ordinary skill in the art. Experimental results are depicted in Fig. 4(b), which is depicting results of exemplary measurements under 0.1 C, and Fig. 15, which is depicting results of exemplary measurements under 0.25 C. Briefly described: A cell composed of an NCM cathode and an In/InLi anode with a fixed potential has equilibrium open circuit potential ($V_{oc}$). The $V_{oc}$ follows a well-defined function vs. state of charge representing lithium content (Li_X) of the NCM. Using the reference data of the $V_{oc}$ function with Li_X (Fig. 14), the actual specific capacity ($Q_{act}$) can be determined by the difference in state of charge after the charging and discharging process. Then the active mass ($m_{act}$) can be calculated by the measured discharge capacity ($Q_{meas}$) and $Q_{act}$ in the following equation [1].

$$m_{act} = \frac{Q_{meas}}{Q_{act}} \quad [1]$$

The $m_{act}$ of polymer-coated NCM cells and pristine NCM cells of 0.1C cycling test are compared in Fig. 4 (b). Initially, 1P-NCM, 5P-NCM, and pristine NCM cells have $m_{act}$ around 7.6 mg, 7.4 mg, and 7.8 mg, respectively. Active mass for polymer coating is slightly less than pristine since some parts of polymer coating on NCM are too thick, making NCM becomes insulated. However, after 0.1C rate for 100 cycles, the retention of $m_{act}$ of pristine, 1P-NCM, and 5P-NCM cells are around 81.1%, 92%, and 85.5%, respectively. The better $m_{act}$ retentions for polymer-coated NCM cells during cycling can - without being bound by a certain theory - be explained as the alleviation of electrochemically inactive interfacial layer. Nevertheless, 1P-NCM shows better $m_{act}$ retention than 5P-NCM as the polymer coating of 5P-NCM is hindering ion transport or charge transport to some degree because of higher thickness. The exemplarily provided data shows best results so far with a thickness of 4 nm to 5 nm, but these results are not to be understood as being confining the scope of the range of thickness. Depending on the ion conductivity of the polyelectrolyte (e.g. polycationic polymer) the thickness oft he coating can vary between 0.1 nm and 1000 nm. Similar results can also be observed in the 0.25C cycling test (Fig. 15).

EIS measurements of 0.1C are carried out during cycling, as shown for example in Fig. 4 (c), and exemplary results are shown in Fig. 16. The interface between the cathode and the solid electrolyte is an essential factor affecting the $R_{ct}$, providing information on contact loss and interface degradation. In the first cycle at 3.15 V (vs. $Li^+$/Li-In), thicker polymer coating layers give rise to higher $R_{ct}$ (pristine NCM: 19.24 Ω, 1P-NCM: 21.9 Ω, 5P-NCM: 28.5 Ω), matching the first cycle $m_{act}$ results. Nonetheless, the $R_{ct}$ of the pristine NCM cell increases more significantly after 100 cycles than that of 1P-NCM and 5P-NCM cells (pristine NCM: 173 Ω, 1P-NCM: 115.1 Ω, 5P-NCM: 106.9 Ω). The significant increase in $R_{ct}$ of the pristine NCM cell may - without being bound to a certain theory - be caused by severe contact loss and interface degradation. EIS measurements show that the polymer coating acts as a protective layer at the NCM/LPSCI interface, matching the results of $m_{act}$ calculation and the dQ/dV discussion. Additionally, 1P-NCM and 5P-NCM cells have similar $R_{ct}$ after 100 cycles, indicating that 1 wt% of the polymer coating layer is sufficient to act as a protective layer for NCM. The EIS measurements for 0.25C cycling cells (cf., e.g., Fig. 3) also show the same conclusion as the 0.1C results.

**Lithium diffusion pathways within the cathode composite**

The lithium diffusion pathway length within the cathode composite is expected to increase during cycling due to contact loss, interface degradation, and NCM particle cracking. Warburg behavior in EIS is fitted by the particle size distribution (EIS-PSD) model - as is known to any person of ordinary skill in the art - to determine the length of the lithium diffusion pathway within the cathode composite. In general, the ideal finite-space Warburg behavior describes the diffusion throughout the sample volume, including the ion blocking boundary at the current collector and the innermost center of the NCM. If the frequency is low enough to reach the blocking boundary, the impedance will have capacitive-like behavior, which has a continuous transition from 45° to 90° in the Nyquist-plot. Consequently, to get the finite-space Warburg behavior in EIS, the lower cutoff frequency is applied to 100 μHz. Finite-space Warburg impedance element of cylindrical particles ( $Z_{\mathrm{fs}}^{\mathrm{cylindrical}}$ ) is used to describe the complex geometry of Li+ diffusion in the NCM, and the thickness of the cylindrical particle ($L_{diff}$) can be taken as the lithium diffusion pathway length. Therefore, if the lithium diffusion pathway length increases, the finite-space Warburg behavior will behave as a bigger particle. The $Z_{\mathrm{fs}}^{\mathrm{cylindrical}}$ has a function of characteristic time constant of lithium diffusion $\tau_i$ (Eq. [3]) and the volume fraction of particle contribution $\Delta Q_i$ (Eq. 4).

$$\tau_i = L_{\mathrm{diff}}^2/\widetilde{D}_{Li} \quad [3] \quad \text{and} \quad Z_{\mathrm{fs}}^{\mathrm{cylindrical}} = \frac{1}{C_{\mathrm{diff}}}\left(\sum_i \frac{\Delta Q_i}{\tau_i}\frac{\sqrt{i\omega\tau_i}}{\coth\sqrt{i\omega\tau_i}}\right) \quad [4]$$

Eq. 4 is used to fit the finite space diffusion tail of EIS coupled with the transition line model (TLM), as is well known in the state of the art. $C_{diff}$ is the total differential capacity of the entire electrode ($C_{diff} = \partial Q/\partial E$ ) which is assumed as 340 mAh $V^{-1}$ $g^{-1}$ (3.15 V (vs. $Li^+$/Li-In), and $x$ = 0.6 ) and calculated from the reference data (Fig. 14). $\tilde{D}_{Li}$ of NCM is assumed as $10^{-11}$ $cm^2$ $S^{-1}$ at 25 °C, cited from Literature well known within the state of the art and obtained by the fitting of semi-finite part of diffusion tail in EIS. Fitting of impedance yields the $L_{diff}$ values and the volume fractions (represented in a culmination form) are shown in Fig. 17 (a). It can be seen that $L_{diff}$ of pristine NCM increased considerably (around 1.1 μm to 4.3 μm) compared to 1 wt% coated NCM cell (around 1.0 μm to 2.2 μm) and 5 wt% coated NCM cell (around 1.0 μm to 2.7 μm). The results of CA draw the same conclusion as EIS-PSD results mentioned above. CA is applied to have the voltage maintained at 3.15 V (vs. $Li^+$/Li-In) until the current was reduced to 1%, allowing the lithium-ion concentration within the NCM particles to reach the equilibrium state. The time it took was positively related to lithium diffusion path length, i.e., the longer the time, the longer the lithium diffusion path. Fig. 17 (b) shows that at the $100^{th}$ cycle of 0.1C cycling, pristine NCM cell needs 599.8 minutes to reach the equilibrium state. However, 5 wt% coated and 1 wt% coated NCM cells need 459.8 and 347.1 minutes, respectively. The results from CA and EIS-PSD calculation show that the pristine NCM cell has a much longer lithium diffusion path length than the coated NCM cells after cycling. The significantly increased lithium diffusion path length of pristine NCM cell provides the evidence of the interface degradation and the particle cracking within the particles. Additionally, CA results for 0.25C cycling give the same results as for 0.1C

In order to compare the lithium transport within the NCM particles after cycling test, GITT coupled with EIS are adopted to determine the diffusion coefficient $\tilde{D}_{Li}$ after 100 cycles of 0.1C test. Assuming negligible changes in $c_0$ happen during polarization steps, the open circuit potential $V_{oc}$ is assumed to follow the equation [5] below in the case of semi-infinite diffusion.

$$V_{oc} = V_0 - WRT/nF[(c_i - c_0)/c_0] \quad [5] \quad \text{with} \quad Z_w = \frac{WRT}{n^2F^2AC_0\sqrt{\tilde{D}_{Li}}} \quad [6]$$

$V_0$ is the open circuit potential $V_{oc}$ of the previous cycle. $C_0$ is the equilibrium concentration, i.e., lithium concentration before the polarization step. $Z_w$ is the Warburg coefficient determined from $Z_{Re}$ versus $\omega$ data by EIS after every relaxation process. $W$ is the enhancement factor taking the form as $W = \partial \ln(\alpha_i)/\partial \ln(c_i)$, meaning that the activity gradient concerns the concentration gradient if only one ionic and electronic species are considered. Additionally, n, F, A, are the number of transferred electrons, Faraday's constant, and the electrochemically active electrode surface, respectively. As NCM may lose contact from electrolyte during cycling, the electrochemically active electrode surface A after cycling was estimated: A= (BET area of NCM) × (active mass after cycling)/(active mass before cycling). $W$ can be obtained through GITT experiment by formula [5] as supportive proof. Therefore, $\tilde{D}_{Li}$ (Fig. 18 (b)) can be determined by formula [6] with the $Z_w$ gotten from EIS (Fig. 18 (a)). Moreover, since the surface area of active materials might change due to grinding and mixing during the preparation of cathode composite, apparent diffusion coefficient $\tilde{D}_{Li}^{app}$ is used herein.

It is clear from Fig. 18 (b) that $\tilde{D}_{Li}^{app}$ of pristine NCM cell is much lower than the coated NCM cells after 100 cycles. However, 5P-NCM cell have the highest $\tilde{D}_{Li}^{app}$, and 1P-NCM cell's $\tilde{D}_{Li}^{app}$ is a bit lower than that of the 5P-NCM cell. The reason for lowest $\tilde{D}_{Li}^{app}$ of pristine NCM cell may - without being bound to a certain theory - be due to the more severe cracking inside the pristine NCM particle compared to the coated NCM. However, increasing polymer content for coating can hinder the cracking, giving rise to a highest $\tilde{D}_{Li}^{app}$ for 5 wt% coated NCM cell.

**Morphology and interfacial stability after cycling**

Low-angle FIB-SEM is employed to observe the morphological change in the cathode composite after cycling. Pristine NCM cell shows more fracture within the particles than the coated NCM cells, and 5P-NCM cell has the least cracking. Without being bound to a certain theory, one of the reasons for alleviating cracking may be due to the less lithium extracted from the NCM, especially for the H2+H3 phase transition during the charging step, which has the most severe volume change. However, the capacity and the area under the dQ/dV plot above 4.1 V (vs. $Li^+$/Li) is similar for both polymer-coated NCM cells and the pristine NCM cell, indicating that all the NCM cells have similar H2+H3 phase transition process, as shown in Fig. 12 (a). As a result, the alleviation of the cracking in coated NCM is because the polymer mitigates the volume expansion and contraction of the NCM cathode material during cycling. For optimising this effect, the thickness of the coating is to be increased. Because electrical conductivity is reduced with increasing thickness of the coating, there is an optimum thickness of the coating, ranging from 0.1 nm to 1000 nm, the optimum thickness for the coating being exemplarily tested so far ranging from about 4nm to about 5 nm.

The comparative ToF-SIMS experimts of pristine NCM and coated NCM revealed herein provide proof for the reduction of decomposition products of electrolyte and thus the positive influence being exerted by the invention upon the electrochemical cycling stability of electrode active materials, especially cathode active materials, in combination with electrolytes. It is well known to the person of ordinary skill in the art how to perform such comparative ToF-SIMS measurements, e.g. how to set the following experimental parameters:

- Number of cycles of an electrochemical cell to be run before being disassembled and investigated (e.g. up to several hundred cycles);
- Choice of decomposition processes to be considered (e. g. processes between current collector and solid electrolyte and/or between carbon additive and solid electrolyte and/or between CAM (i.e. coating according to the invention) and solid electrolyte);

- Choosing indicator molecules for indicating oxidative decomposition, e.g. phosphates ($PO_x^-$);
- Choice of suitable parameters for providing sufficient statistical reliability of the experimental results (e.g. measuring up to 10 or even more spectra per sample).

The experimental findings are:

- The amount of $PO_x^-$ (especially $PO^-$, $PO_2^-$ and $PO_3^-$), is significantly reduced for the coated samples, proving that the exemplarily tested 1 wt% and 5 wt% PVBTA-TFSI coatings effectively reduce the formation of phosphates. Thus, the decomposition of the thiophosphate-based solid electrolyte is inhibited by the exemplarily tested PVBTA-TFSI coating. There are more $PO_2^-$ and $PO_3^-$ fragments detectable with the 1 wt% coating than with the 5 wt% coating, proving that thicker coatings are more effective in suppressing the decomposition of the solid electrolyte than thinner coatings.

**Description of the drawings**

Fig. 1: Exemplary Schematic illustration of the PVBTA-TFSI synthesis and process for spray coating of NCM particles with PVBTA-TFSI.

Fig. 2: Exemplary schematic depiction of Electrochemical analysis. The charging processes are shown by way of continue-lined arrows, and the discharging processes are shown by way of dash-lined arrows. ASSBs are galvanostatically charged to 3.15 V (vs. $Li^+$/Li-In) and then maintained the potential at 3.15 V (vs. $Li^+$/Li-In) until the current drop to less than 1%. After that, EIS is measured from 1 MHz to 100 $\mu$Hz. Subsequently, The ASSBs are galvanostatically charged to 3.7 V (vs. $Li^+$/Li-In), followed by a 2 hours relaxation process. Finally, The ASSBs are discharged to 3.7 V (vs. $Li^+$/Li-In), followed by a 2 hours relaxation process as well. For purpose of clarity it is pointed out that the inserted graphs of the first (main) part of Fig. 2 are duplicated and depicted again enlarged, following the first part of Fig. 2. The correlation of the inserted graphs to the enlarged copies of the inserted graphs is easily recognizable by the progression of the depicted values resp. curves.

Fig. 3: Exemplary depiction of EIS of 1P-NCM, 5P-NCM, and pristine NCM cells, each measured at 0.25 C after chronoamperometry.

Fig. 4: Exemplary depiction of: (a) Long-term cycling capability at 0.1 C, (b) corresponding active mass evolution at 0.1 C, (c) Nyquist plot for 1$^{st}$ and 100$^{th}$ cycle (measured at 0.1 C), (d) long-term cycling capability at 0.25 C

Fig. 5: Exemplarily depicts $^1$H NMR spectrum of the PVBTATFSI (400 MHz, deuterated acetone): $\delta$ 1.36-1.99 (H1, H2), $\delta$2.05 (acetone-d6), $\delta$ 3.14 (H6), $\delta$ 4.4-4.9 (H5), $\delta$ 6.5-7.4 (H3, H4).

Fig. 6: Exemplary depiction of FT-IR spectra of PVBTA-TFSI, PBVTA-Cl, and LiTFSI. FT-IR of PVBTA-TFSI ($cm^{-1}$): 973 (C-N stretching), 1346, 1326, 1176, 1132, 1050 ($TFSI^-$), 1612, 1480, 1422 (aromatic C=C stretching), 3043, 2922, 2852 (alkyl C-H stretching), 3400 (H2O). FT-IR of PVBTA-Cl ($cm^{-1}$): 973 (C-N stretching), 1612, 1480, 1422 (aromatic C=C stretching), 3015, 2922, 2852 (alkyl C-H stretching), 3400 (H2O). FT-IR of LiTFSI ($cm^{-1}$): 1327 ($SO_2$ asymmetric stretching), 1245 ($CF_3$ symmetric stretching), 1204 ($CF_3$ asymmetric stretching), 1147 ($SO_2$ symmetric stretching), 1065 (asymmetric $S_2N$ stretching).

Fig. 7: Exemplary depiction of XRD measurement. The XRD of LiTFSI and LiTFSI prove that PVBTA-TFSI is an amorphous polymer.

Fig. 8A: Exemplary depiction of IR-spectra. FT-IR of PVBTATFSI, mixed with LPSCL shows no difference before and after heating.

Fig. 8B: Exemplary depiction of XRD patterns of PVBTATFSI mixed with LPSCL after heating also match the peak before heating completely.

Fig. 9: TGA analysis of PVBTA-TFSI, demonstrating an example of the upper limit temperature for spray drying. (Air/$O_2$ with a heating rate of 10 °C/sec).

Fig. 10: Exemplary TEM images of (a) pristine NCM, (b) 1P-NCM, and (c) 5P-NCM. TEM (and ToF-SIMS evaluation, data not shown here) confirm a completely covering and homogenous PVBTA-TFSI coating on the NCM CAM (i.e. NCM particles, exemplarily coated).

Fig. 11: Exemplary comparison of (a) rate capability test, (b) the differential capacity plot of $1^{st}$ cycle at 0.1C with enlargement from 2-3 V (vs. $Li^+$/Li-In). Inset figure shows capacity and coulombic efficiency of different C-rates for coated and pristine NCM cells for $25^{th}$ cycle, cycled at 0.1C. The inset figure within part (b) is depicted additionally outside of part (b) enlargened, for sake of readability.

Fig. 12: Exemplary comparison of differential capacity plot of (a) 0.1C $1^{st}$ cycle and (b) 0.1C $25^{th}$ cycle of polymer coated and pristine NCM cells.

Fig. 13: Exemplary comparison of 0.1C cycle stability of pristine NCM, 5P-NCM, and 5wt% PVP coated NCM. 5P-NCM and 5wt% PVP coated NCM have similar capacity retention but different initial capacity.

Fig. 14: Exemplary relationship between x in $Li_xNi_{0.83}Mn_{0.06}Co_{0.11}O_2$ and $\boldsymbol{V_{oc}}$ is obtained by galvanostatically charging and discharging a liquid Lithium-ion battery at 0.02C. After every 20 minutes of charging or discharging, it relaxes for two hours to obtain ***Voc***. Besides, x in $Li_xNi_{0.83}Mn_{0.06}Co_{0.11}O_2$ can be calculated by the current and time.

Fig. 15: Exemplary comparison of corresponding active mass evolution under 0.25C cycling test.

Fig. 16: Exemplary data of EIS measurements

Fig. 17: Exemplary evolution of the lithium diffusion pathway length $L_{diff}$ by (a) EIS-PSD model and (b) CA measurement.

Fig. 18: Exemplary depiction of (a) Warburg coefficient ($Z_w$), determined by EIS, and (b) Diffusion coefficient $\widetilde{D}_{\mathrm{Li}}^{app}$, measured by GITT method.

## Claims

1. A coated particulate material comprising

i) a plurality of core particles, whereat each core particle comprises at least one compound of formula (I),

$$Li_{1+w}[Ni_{1-x-y-z}Co_xMn_yM_z]_{1-w}O_2 \qquad (I),$$

and/or at least one compound of formula (II),

$$Li_{1+w}[Ni_{1-x-y-z}Co_xAl_yM_z]_{1-w}O_2 \qquad (II),$$

and/or $LiNiO_2$,
wherein $0 \leq w \leq 0.3$, $0 \leq x \leq 1$, $0 \leq y \leq 1$, $0 \leq z \leq 0.25$, $0 < x + y + z < 1$
and
M is at least one chemical element independently selected from the list
of chemical elements comprising Be, Mg, Sr, Ba, Al, Ga, In, Tl, transition metals other than Ni, Co and Mn;

and
ii) the surfaces of the core particles exhibit a coating comprising at least one polycationic organic polymer with at least one type of counter anion, whereat the coating is covering at least 50 % of the surfaces of the core particles.

2. Coated particulate material according to claim 1, **characterised in that** the plurality of core particles according to feature i) of claim 1 already comprise a first coating, so that the coating according to feature ii) of claim 1 is forming an outer (second) coating of the coated particulate material and the first coating is forming an inner coating of the coated particulate material.

3. Coated particulate material according to claim 1 or claim 2, **characterised in that** the at least one polycationic organic polymer is independently selected from the list of polycationic organic polymers comprising poly((4-vinyl benzyl)trimethylammonium), poly((3-vinyl benzyl)trimethylammonium), poly((2-vinyl benzyl)trimethylammonium), poly((2-vinyl benzyl)trialkylammonium), poly((2-vinyl benzyl)triarylammonium), poly((2-vinyl benzyl)alkylarylammonium), poly((3-vinyl benzyl)trialkylammonium), poly((3-vinyl benzyl)triarylammonium), poly((3-vinyl benzyl)alkylarylammonium), poly((4-vinyl benzyl)trialkylammonium), poly((4-vinyl benzyl)triarylammonium), poly((4-vinyl benzyl)alkylarylammonium), protonated polyaniline, protonated chitosan, protonated polypyrrole, protonated polydiallyldimethylamine, protonated polyethylenimine, protonated polythiophene, oxidized polyaniline, oxidized chitosan, oxidized polypyrrole, oxidized polydiallyldimethylamine, oxidized polyethylenimine, oxidized polythiophene, poly(diallyldimethylammonium) poly(allylammonium), poly(1-alkyl-3-vinylimidazolium).

**4.** Coated particulate material according to any one of previous claims 1 to 3, **characterised in that** the at least one type of counter anion of the polycationic polymer is independently selected from the list comprising fluoride, chloride, bromide, sulfate, bis(trifluoromethanesulfonyl)imide, tetrafluoroborate, nitrate, hexafluorophosphate, thiocyanate, bis(fluorosulfonyl)imide, azide.

**5.** Coated particulate material according to any one of previous claims 1 to 4, **characterised in that** the average value of thickness of the coating is in the range of from 0.1 nm to 100 nm, preferably 1 nm to 10 nm, most preferably 2 nm to 5 nm.

**6.** Coated particulate material according to claim 5, charcterised in that the thickness of the coating is in at least one area deviating from the average value of thickness up to plus 1000 % of the average value of thickness and/or up to minus 80 % of the average value of thickness, whereat the at least one area where the thickness of the coating is deviating from the average value of thickness is defined by at least one point of measurement.

**7.** A process for preparing a coated particulate material according to any one of claims 1 to 6, **characterised in that** it comprises the following steps

a) providing a plurality of core particles according to feature i);
b) coating the plurality of core particles provided according to step a) with at least one polycationic organic polymer.

**8.** Process according to claim 7, **characterised in that** step b) comprises

1.) providing or synthesizing the at least one polycationic organic polymer;
2.) preparing a solution of the at least one polycationic organic polymer, provided or synthesized according to step 1.), in a solvent, suitable for performing spray-drying, whereat the solvent, being suitable for spray-drying, is a polar aprotic solvent having a boiling point lower than 200 °C;
3.) coating the plurality of core particles provided according to step a) with the solution of the polycationic polymer prepared according to step 2.) by way of spray-drying.

**9.** Electrode for use in a lithium ion battery, comprising

- at least one coated particulate material according to any one of claims 1 to 6;
- at least one lithium-ion conducting solid electrolyte and/or at least one lithium-ion conducting liquid electrolyte and/or at least one lithium-ion conducting polymer electrolyte;
- at least one electrically conducting component, the at least one electrically conducting component being independently chosen from the list comprising carbon black, graphite, graphene, carbon fullerenes, carbon nanotubes.

**10.** Electrode according to claim 9, **characterised in that** it contains one or more binding agents.

**11.** A lithium ion battery comprising

- the coated particulate material according to any one of claims 1 to 6 and/or the electrode according to claim 9 or claim 10;
- at least one solid electrolyte, whereat the at least one solid electrolyte is independently selected from the list comprising the solid electrolytes $Li_6PS_5Cl$, $Li_{7+o-p}M^{IV}_oM^{V}_{1-o}Ch_{6-p}X_p$, $Li_{1+m}Al_mTi_{2-m}(PO_4)_3$, $Li_7La_3Zr_2O_{12}$, $Li_{3n}La_{2/3-n}TiO_3$, $Li_{10}GeP_2S_{12}$, wherein

$M^{IV}$ is independently selected from the list comprising Si, Ge, Sn;
$M^{V}$ is independently selected from the list comprising P, Sb;
Ch is independently selected from the list comprising O, S, Se;
X is independently selected from the list comprising Cl, Br, I, $BH_4$ ;
$0 < m \leq 1$, $0 < n \leq 0.3$, $0 \leq o \leq 1$; $0 \leq p \leq 2$.

**12.** A lithium ion battery comprising

- the coated particulate material according to any one of claims 1 to 6 and/or the electrode according to claim 9 or claim 10;
- at least one liquid electrolyte, whereat the at least one liquid electrolyte comprises at least one lithium salt being dissolved in an aprotic solvent or a mixture of at least two aprotic solvents, the at least one aprotic solvent being independently selected from the list of aprotic solvents comprising ethylene carbonate, diethyl carbonate, dimethyl carbonate, propylene carbonate, fluoroethylene carbonate, dioxolane, dimethylformamid.

**13.** A lithium ion battery comprising

- the coated particulate material according to any one of claims 1 to 6 and/or the electrode according to claim 9 or claim 10;
- at least one polymer electrolyte, whereat the at least one polymer electrolyte

    - contains at least one polymer independently chosen from the list of polymers comprising polyethylene glycol, acrylate polymers, poly(methyl methacrylate), polyvinylpyrrolidon, polyacrylonitrile,
    whereat

        - the at least one polymer is either cross-linked or is not cross-linked; and/or
        - the at least one polymer is a homopolymer or a copolymer.

**14.** A lithium ion battery comprising

- the coated particulate material according to any one of claims 1 to 6 and/or the electrode according to claim 9 or claim 10;
- polymer electrolyte comprising polyethyleneoxide, the polyethyleneoxide comprising at least one lithium salt or at least one single-ion conductor.

**15.** A lithium ion battery according to claim 12 or claim 13, **characterised in that** the at least one polymer electrolyte comprises at least one plasticizer and/or at least one ionic liquid and/or at least one liquid electrolyte.

**16.** Usage of a coated particulate material according to any one of claims 1 to 6 for

- preparing an electrode according to claim 9 or claim 10
or
- preparing a lithium ion battery according to any one of claims 11 to 15.

Fig. 1

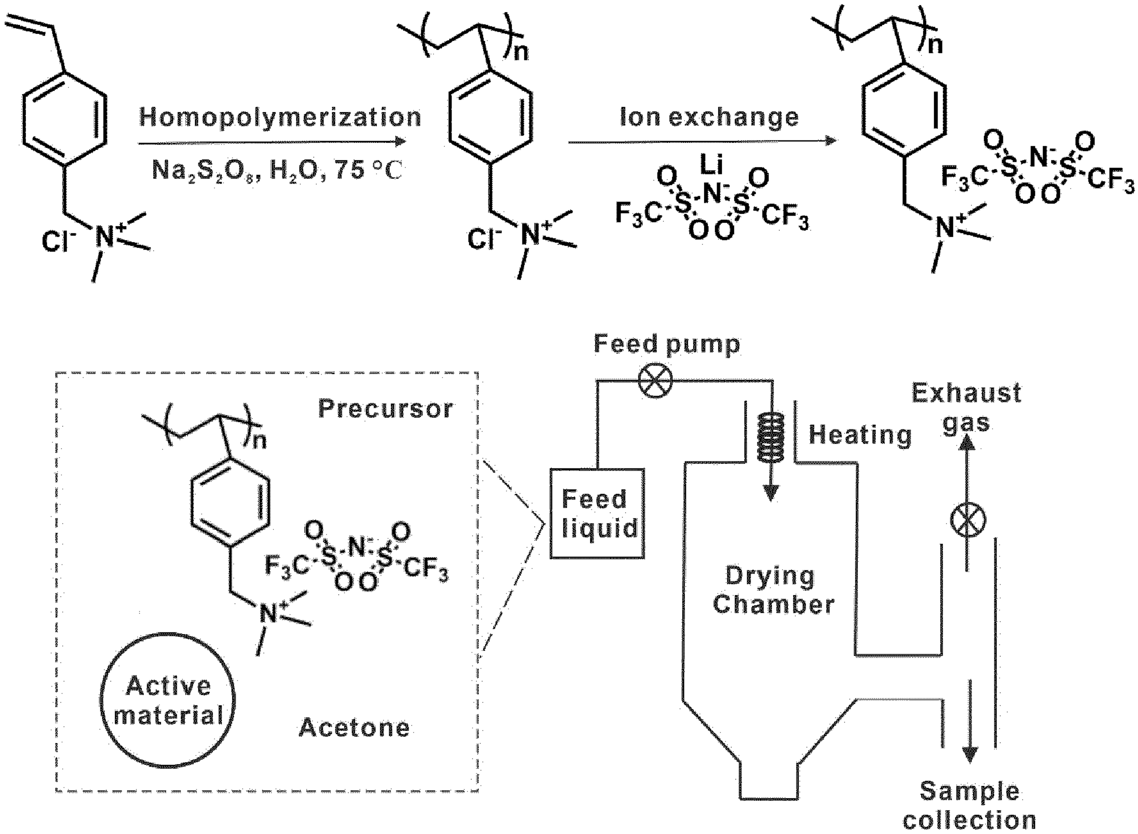
Homopolymerization
Na$_2$S$_2$O$_8$, H$_2$O, 75 °C
Ion exchange
Feed pump
Precursor
Exhaust gas
Heating
Feed liquid
Drying Chamber
Active material
Acetone
Sample collection

Fig. 2

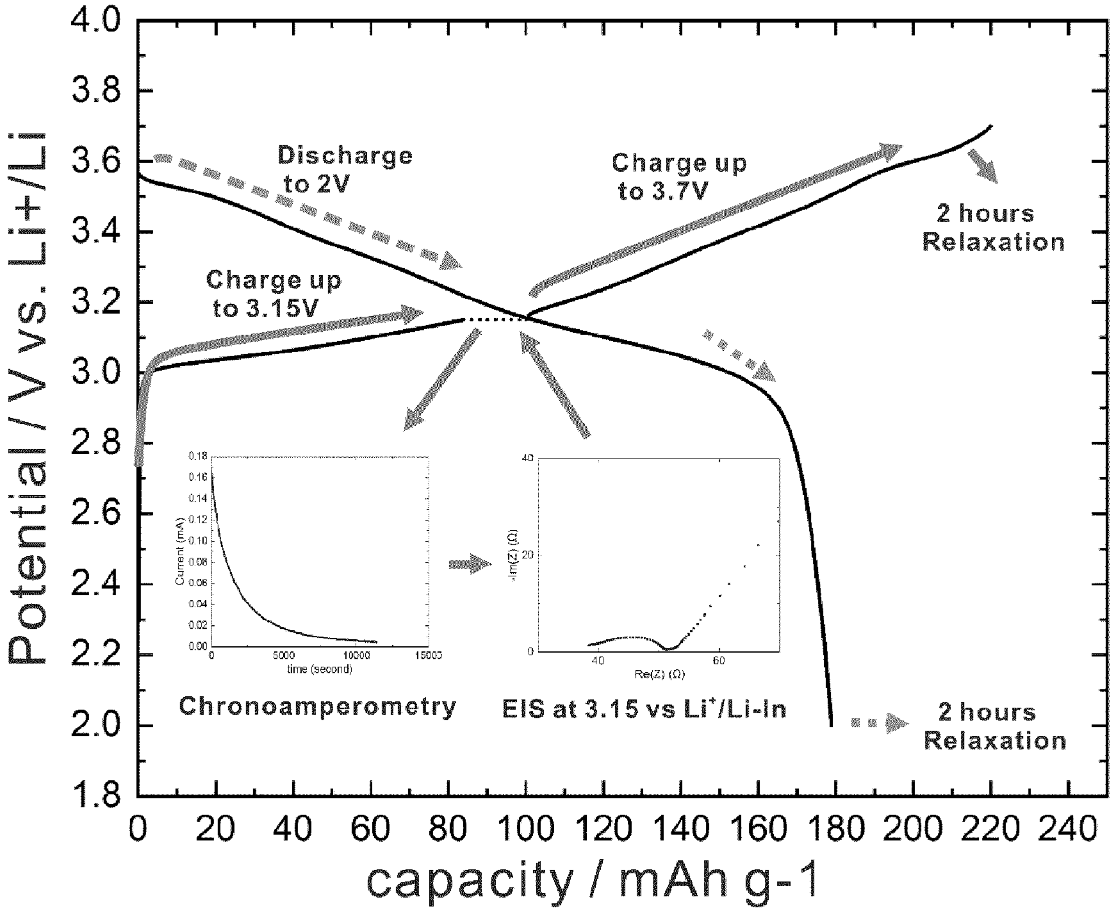


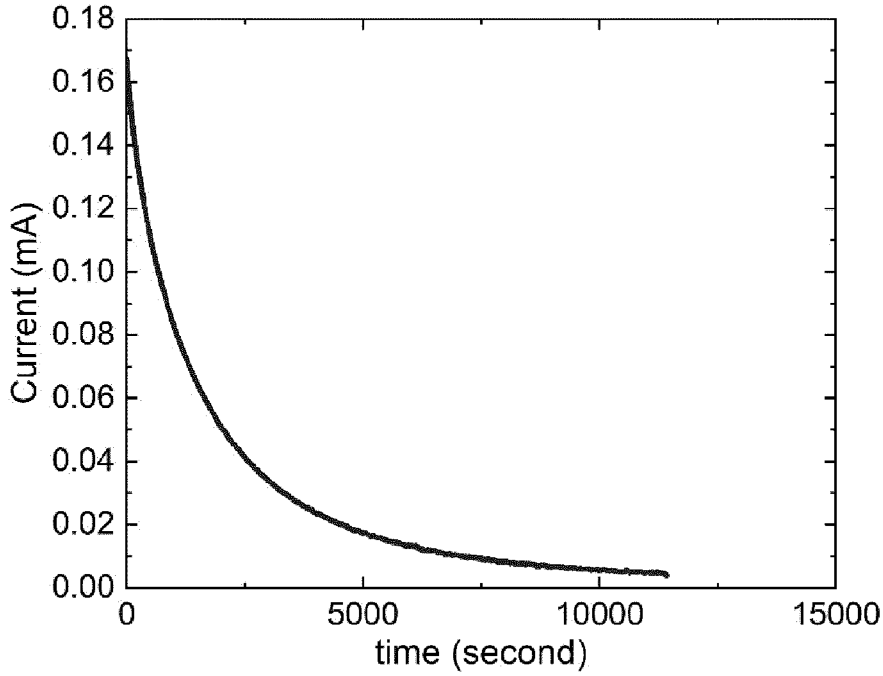


Chronoamperometry

Fig. 2 (cont.)

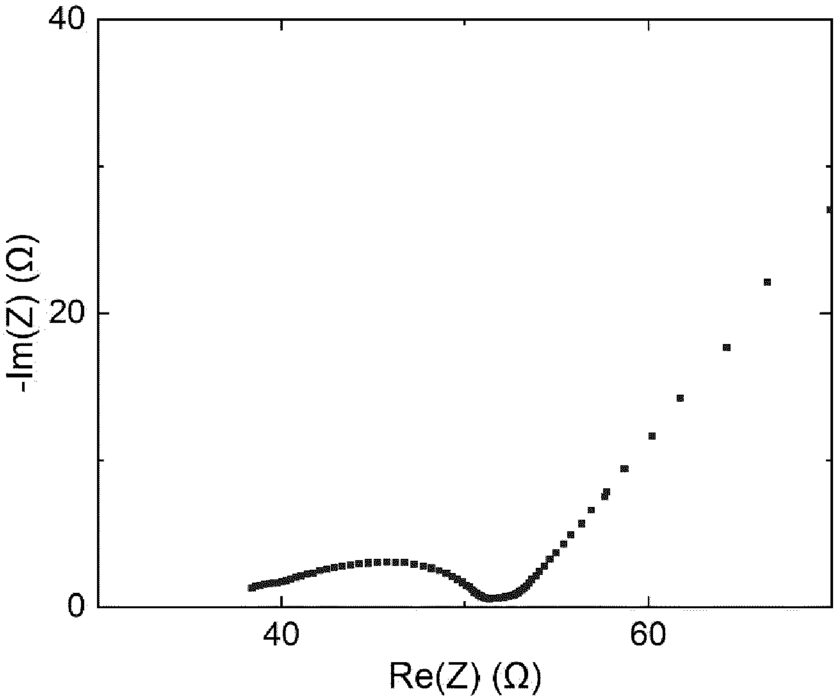


EIS at 3.15 vs. $Li^+$/Li-In

Fig. 3

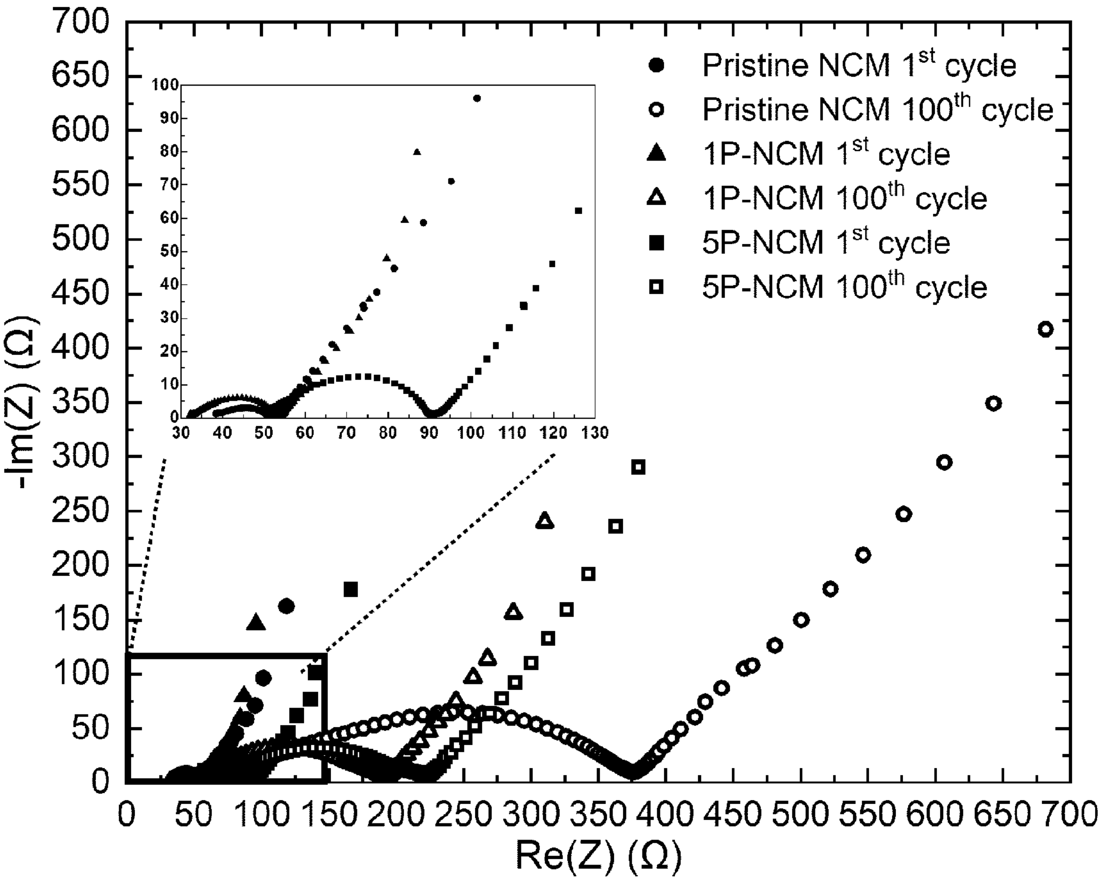
Pristine NCM 1st cycle
Pristine NCM 100th cycle
1P-NCM 1st cycle
1P-NCM 100th cycle
5P-NCM 1st cycle
5P-NCM 100th cycle
-Im(Z) (Ω)
Re(Z) (Ω)

Fig. 4

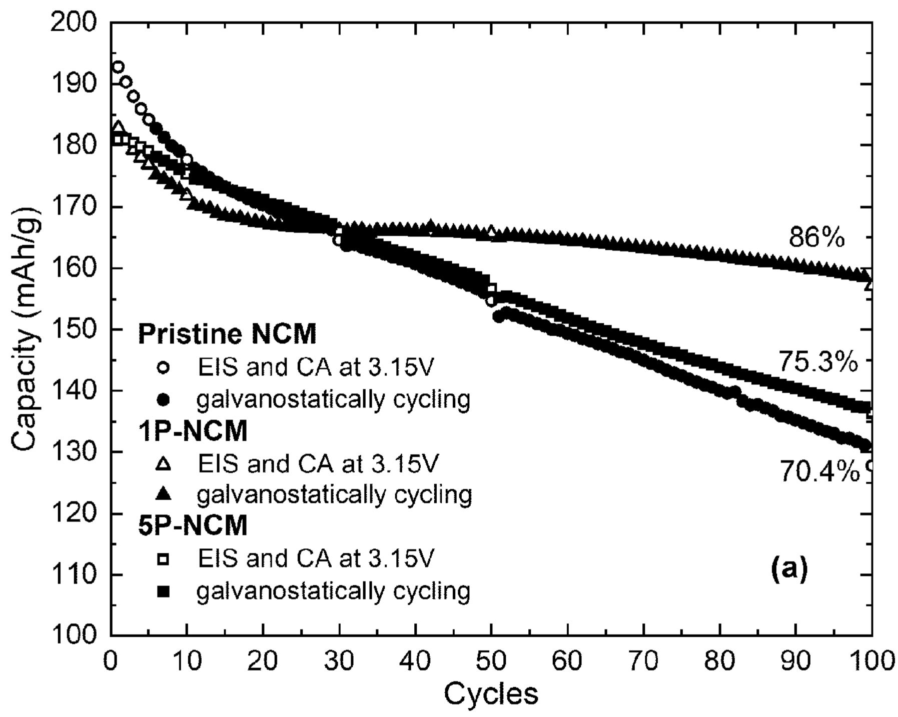
Capacity (mAh/g)
Cycles
86%
75.3%
70.4%
Pristine NCM
EIS and CA at 3.15V
galvanostatically cycling
1P-NCM
EIS and CA at 3.15V
galvanostatically cycling
5P-NCM
EIS and CA at 3.15V
galvanostatically cycling
(a)

Fig. 4 (cont.)

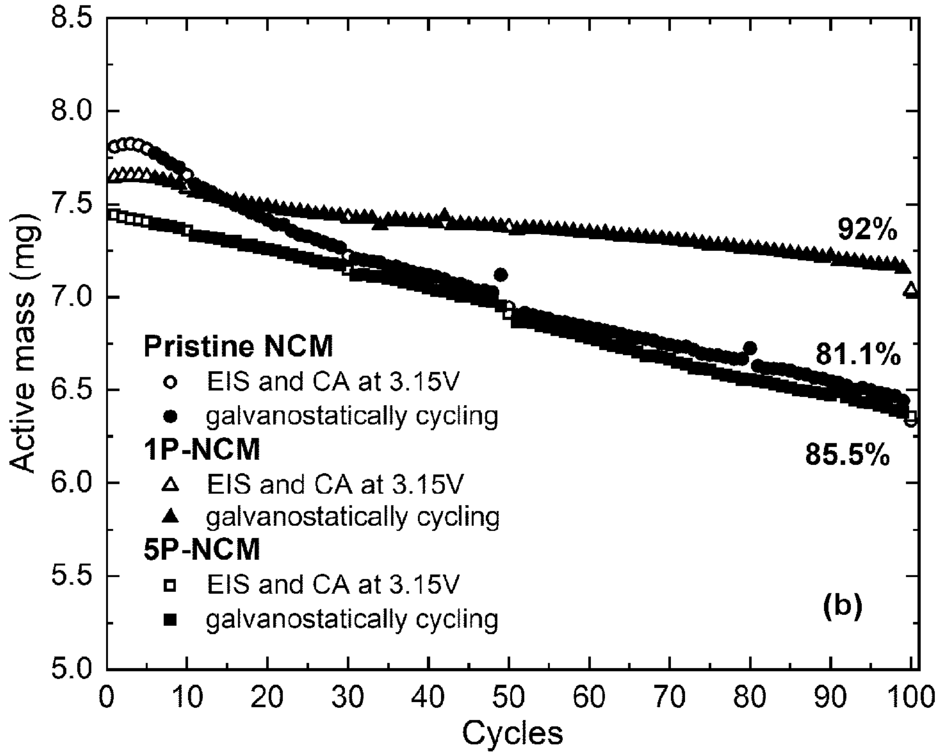
Active mass (mg)
Cycles
Pristine NCM
EIS and CA at 3.15V
galvanostatically cycling
1P-NCM
EIS and CA at 3.15V
galvanostatically cycling
5P-NCM
EIS and CA at 3.15V
galvanostatically cycling
92%
81.1%
85.5%
(b)

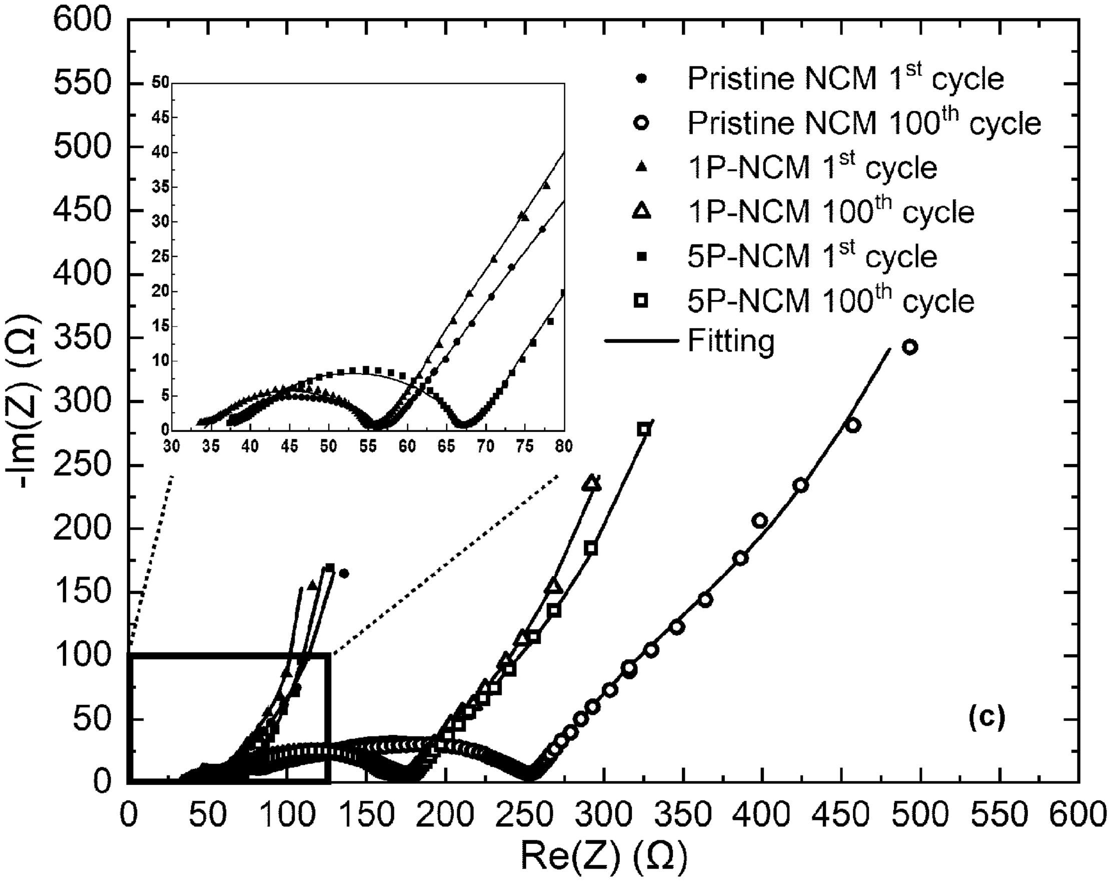
-Im(Z) (Ω)
Re(Z) (Ω)
Pristine NCM 1st cycle
Pristine NCM 100th cycle
1P-NCM 1st cycle
1P-NCM 100th cycle
5P-NCM 1st cycle
5P-NCM 100th cycle
Fitting
(c)

Fig. 4 (cont.)

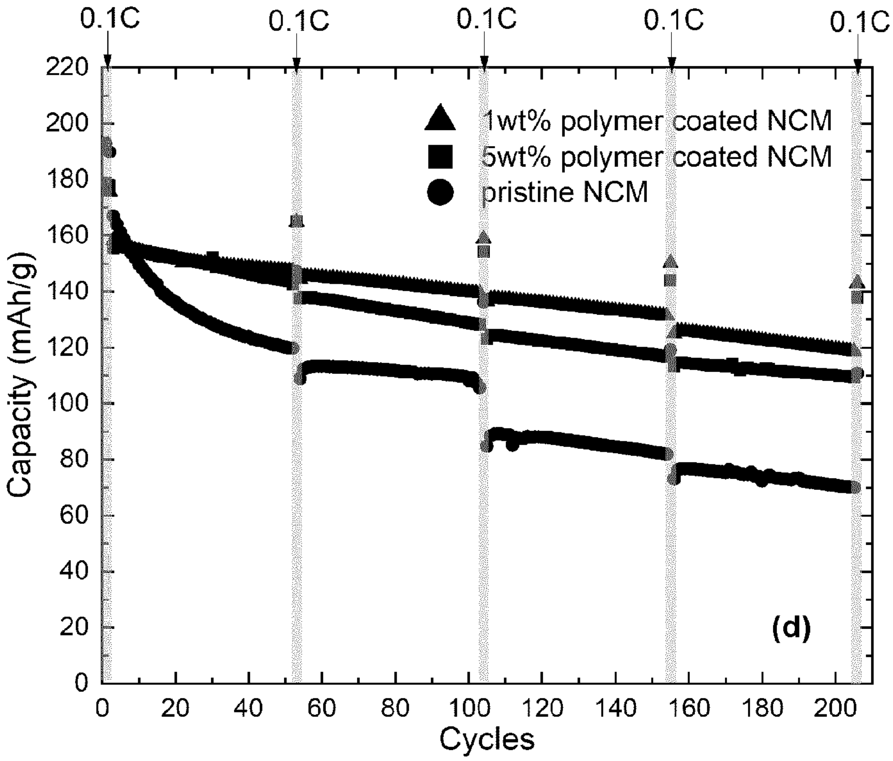


Fig. 5

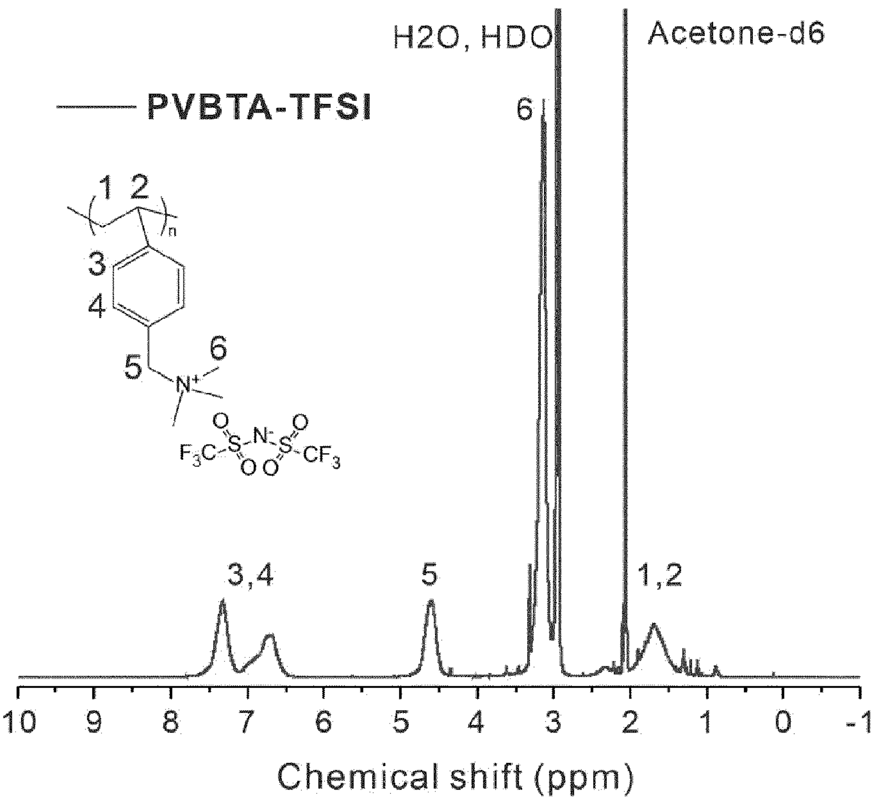

Fig. 6

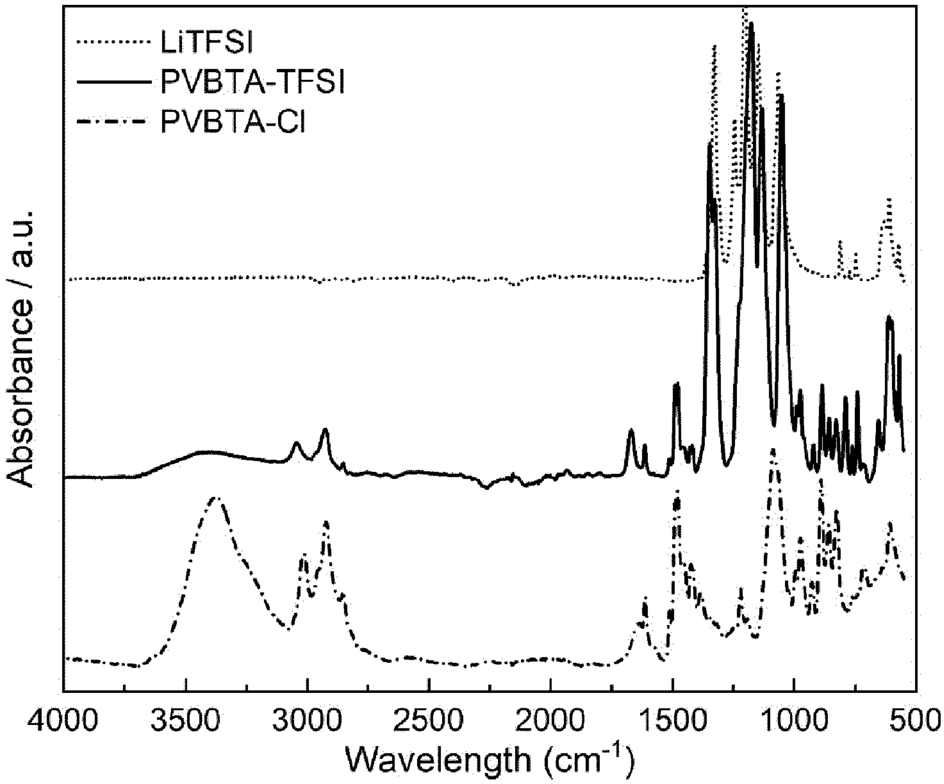
LiTFSI
PVBTA-TFSI
PVBTA-Cl
Absorbance / a.u.
4000 3500 3000 2500 2000 1500 1000 500
Wavelength ($cm^{-1}$)

Fig. 7

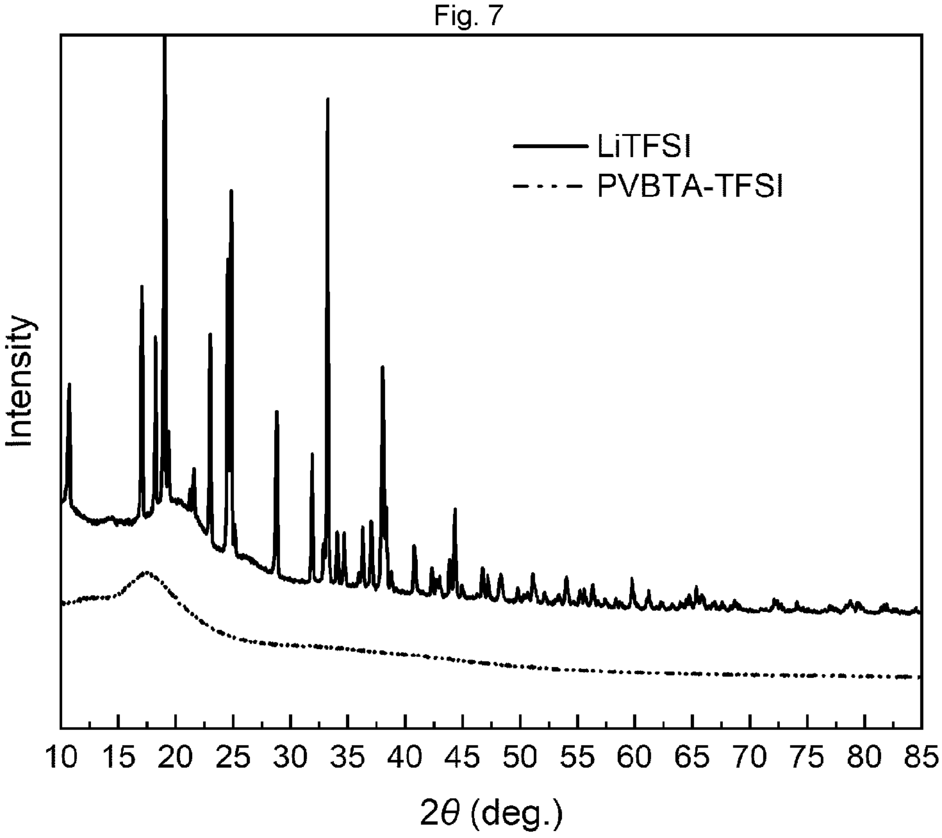
LiTFSI
PVBTA-TFSI
Intensity
10 15 20 25 30 35 40 45 50 55 60 65 70 75 80 85
2θ (deg.)

Fig. 8A

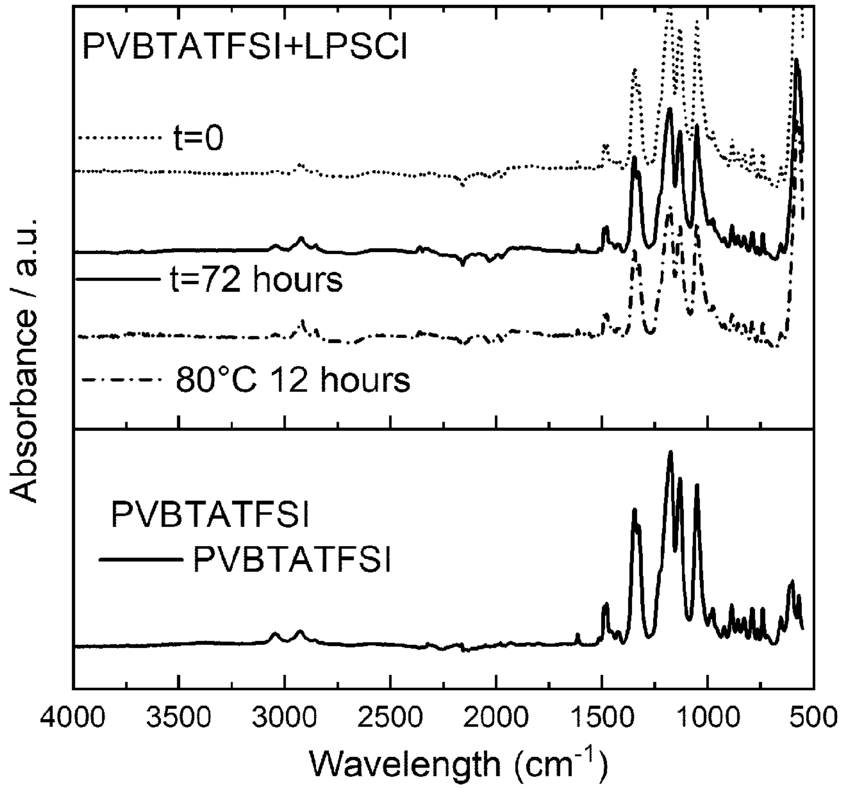
PVBTATFSI+LPSCl
t=0
t=72 hours
80°C 12 hours
PVBTATFSI
PVBTATFSI
Absorbance / a.u.
4000
3500
3000
2500
2000
1500
1000
500
Wavelength (cm-1)

Fig. 8B

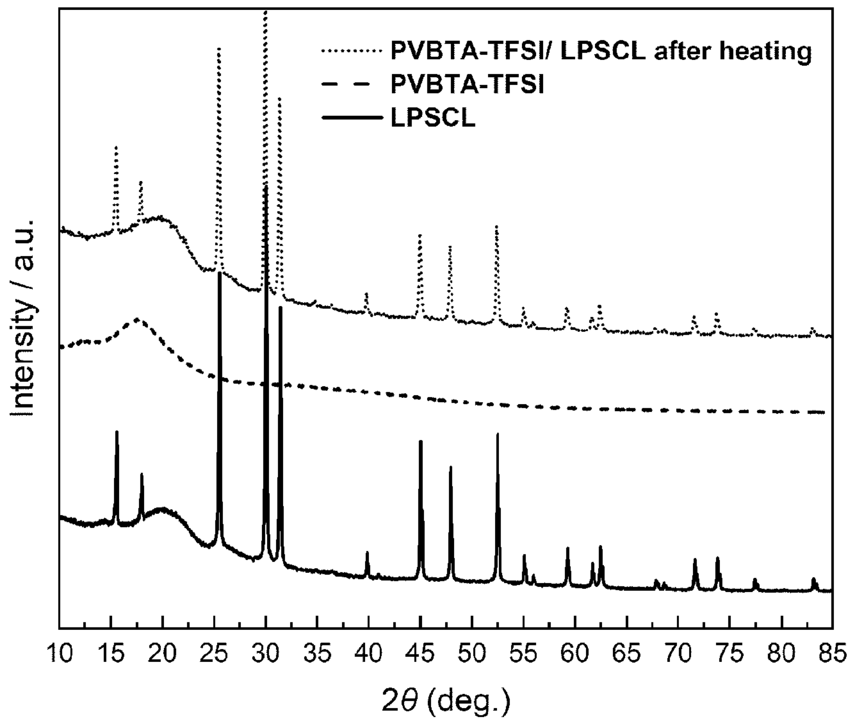
PVBTA-TFSI/ LPSCL after heating
PVBTA-TFSI
LPSCL
Intensity / a.u.
10 15 20 25 30 35 40 45 50 55 60 65 70 75 80 85
2θ (deg.)

Fig. 9

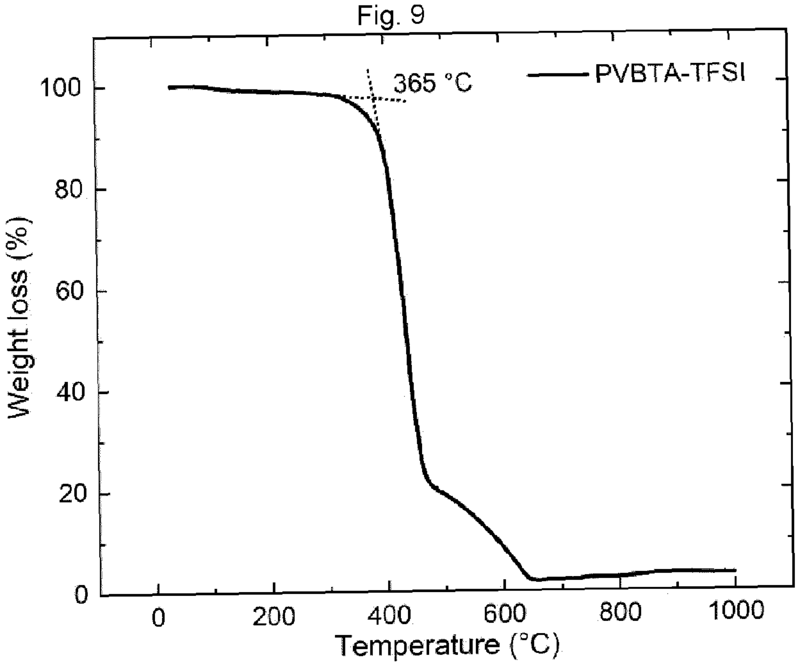
365 °C
PVBTA-TFSI
Weight loss (%)
100
80
60
40
20
0
0
200
400
600
800
1000
Temperature (°C)

Fig. 10

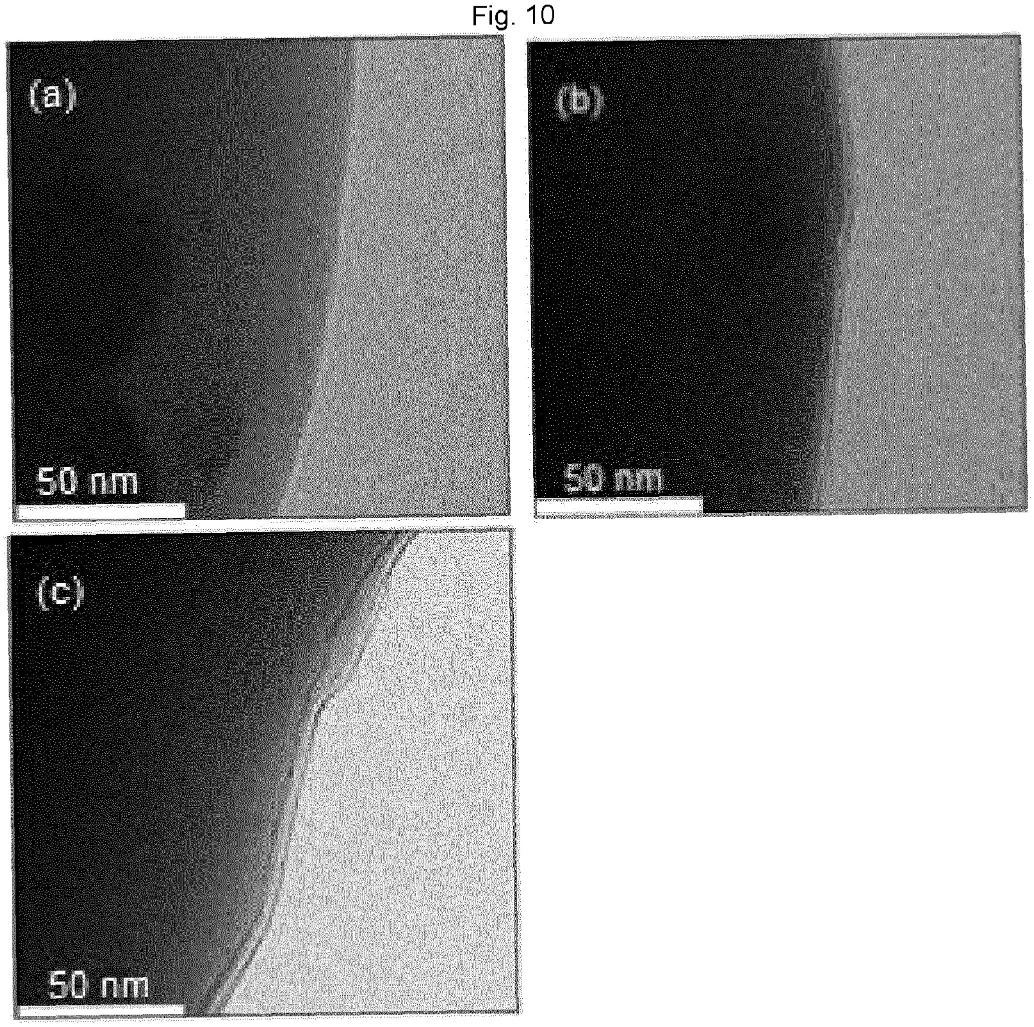
(a)
50 nm
(b)
50 nm
(c)
50 nm

Fig. 11

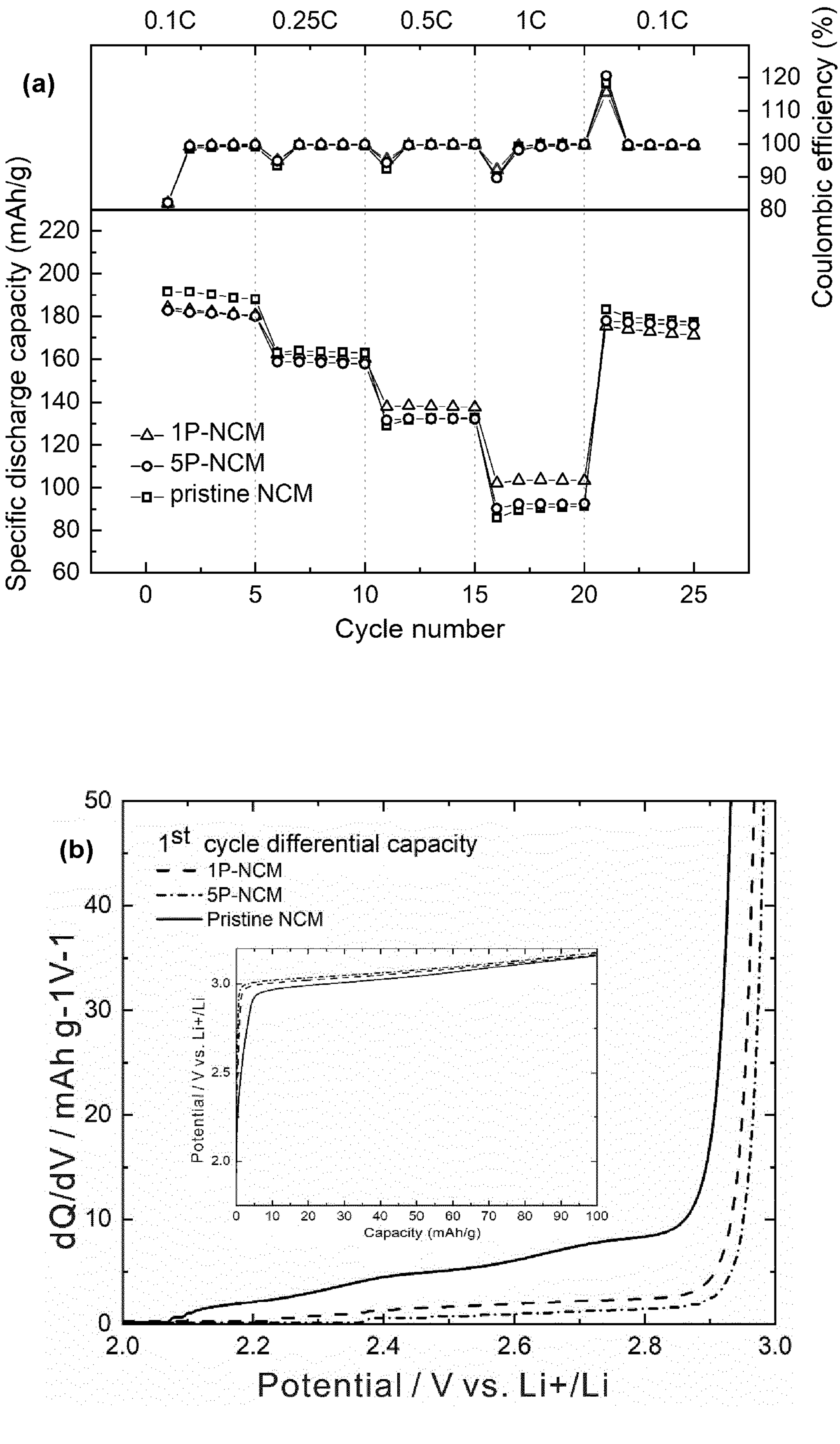
0.1C
0.25C
0.5C
1C
0.1C
(a)
Specific discharge capacity (mAh/g)
Coulombic efficiency (%)
1P-NCM
5P-NCM
pristine NCM
Cycle number
(b)
1st cycle differential capacity
1P-NCM
5P-NCM
Pristine NCM
dQ/dV / mAh g-1V-1
Potential / V vs. Li+/Li
Capacity (mAh/g)

Fig. 11 (cont., enlarged inset of part (b))

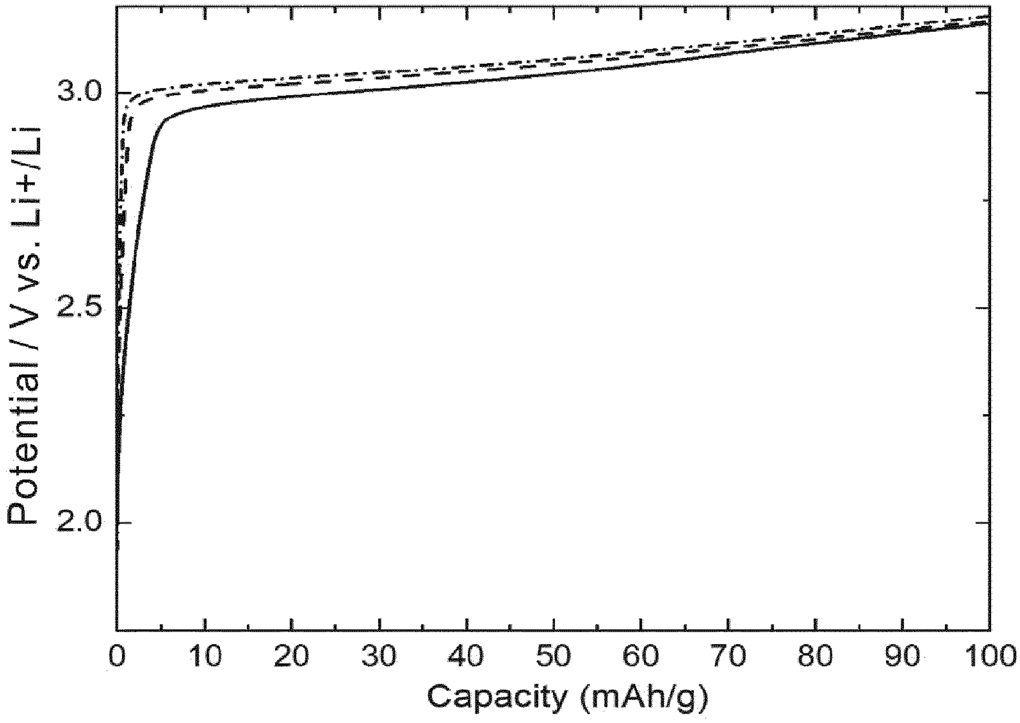


Fig. 12

(a)

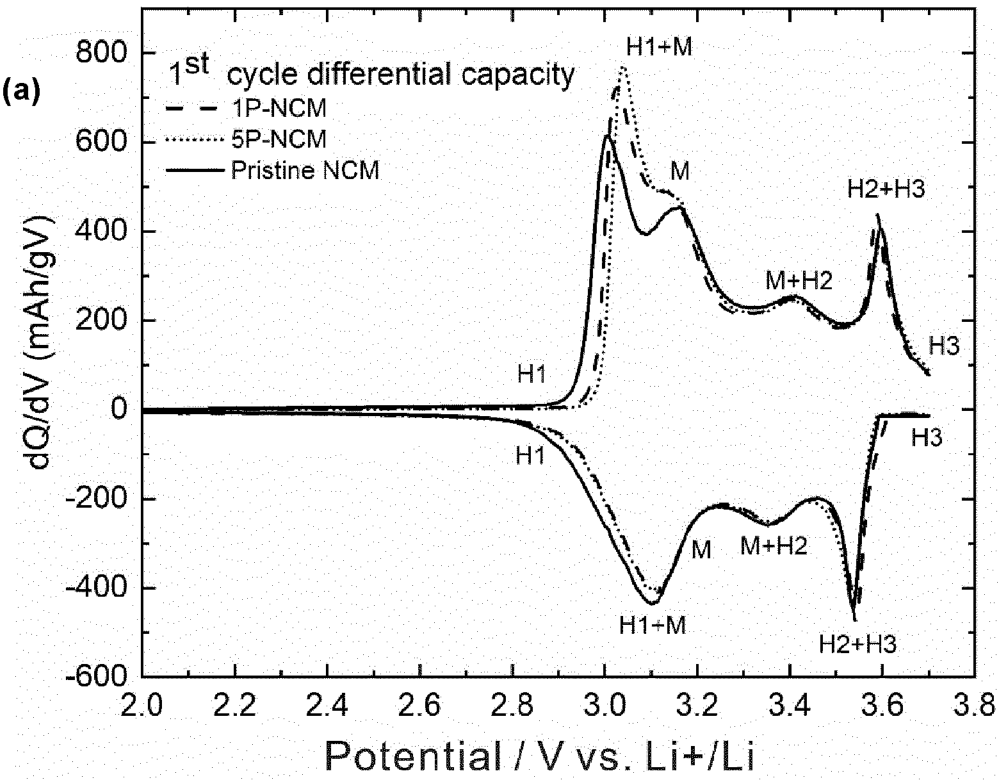

Fig. 12 (cont.)

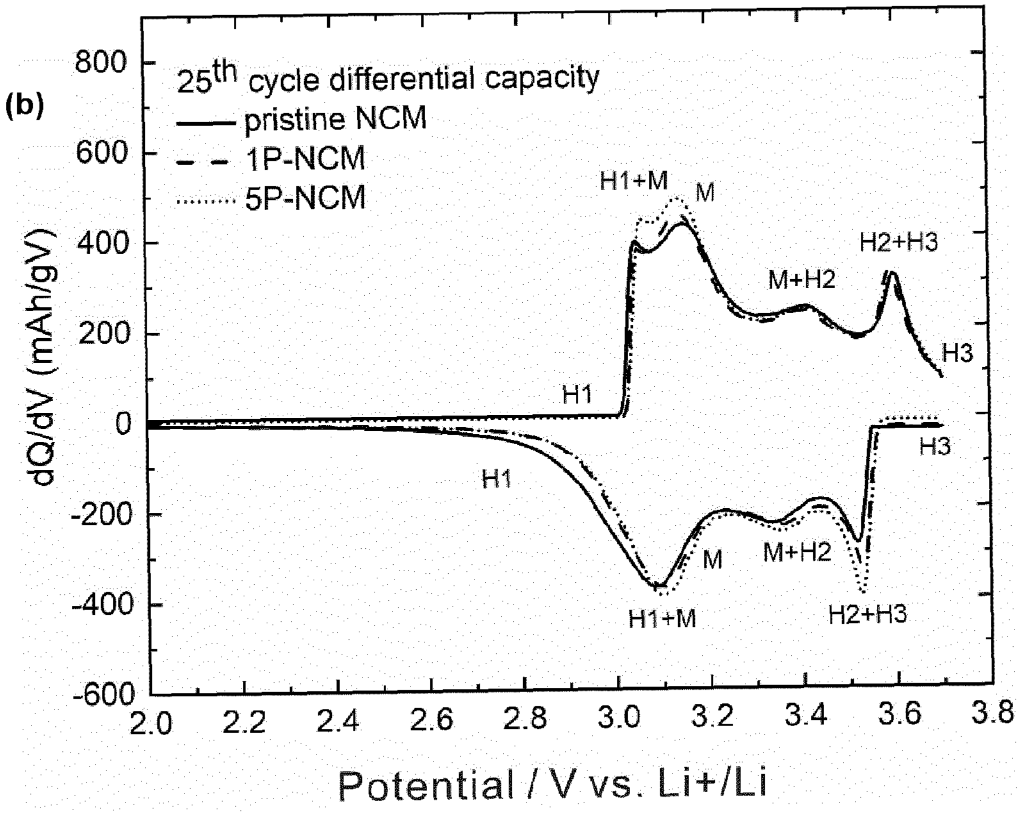


Fig. 13

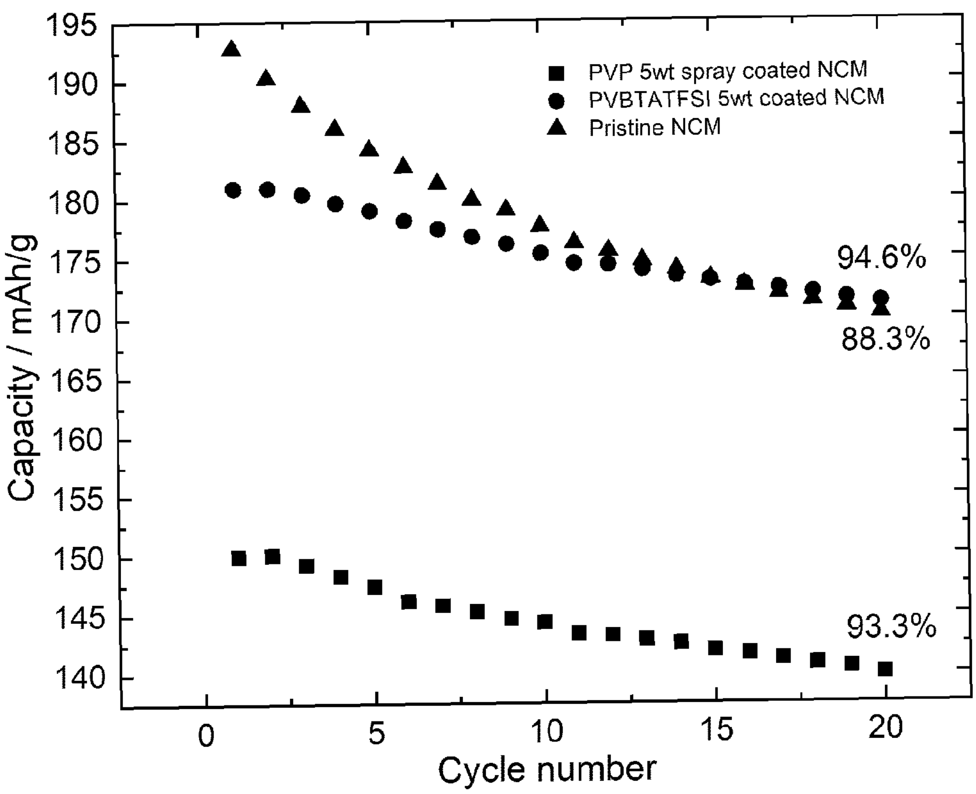

Fig. 14

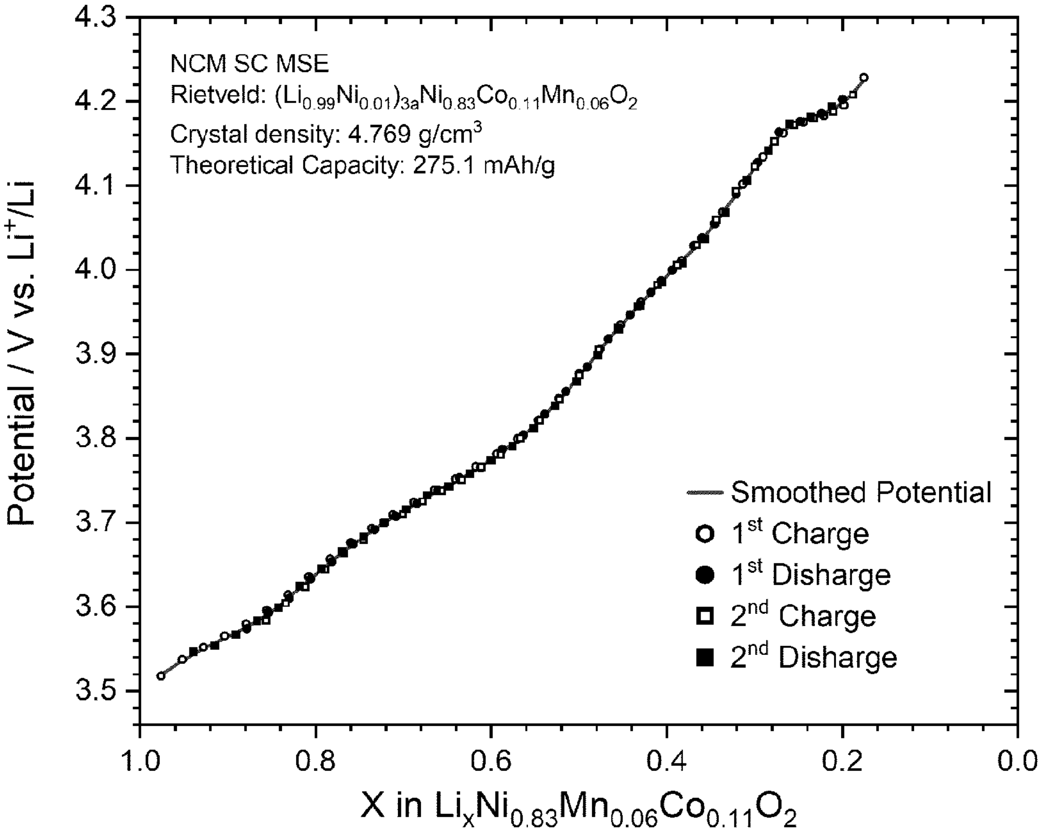
NCM SC MSE
Rietveld: $(Li_{0.99}Ni_{0.01})_{3a}Ni_{0.83}Co_{0.11}Mn_{0.06}O_2$
Crystal density: 4.769 g/cm$^3$
Theoretical Capacity: 275.1 mAh/g
Smoothed Potential
1st Charge
1st Disharge
2nd Charge
2nd Disharge
Potential / V vs. $Li^+$/Li
X in $Li_xNi_{0.83}Mn_{0.06}Co_{0.11}O_2$
4.3
4.2
4.1
4.0
3.9
3.8
3.7
3.6
3.5
1.0
0.8
0.6
0.4
0.2
0.0

Fig. 15

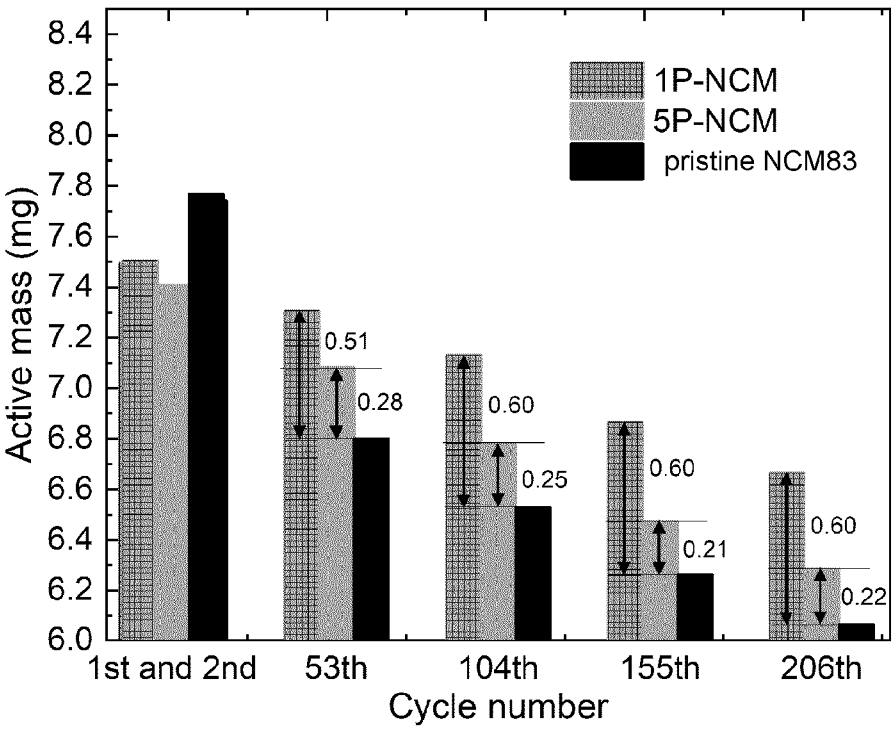
1P-NCM
5P-NCM
pristine NCM83
Active mass (mg)
Cycle number
1st and 2nd
53th
104th
155th
206th
0.51
0.28
0.60
0.25
0.60
0.21
0.60
0.22
8.4
8.2
8.0
7.8
7.6
7.4
7.2
7.0
6.8
6.6
6.4
6.2
6.0

Fig. 16

Table 1: Exemplary results of EIS-measurements

| 5P-NCM | Parameter | 1st cycle | 2nd cycle | 3rd cycle | 4th cycle | 5th cycle | 10th cycle | 30th cycle | 50th cycle | 100th cycle |
|---|---|---|---|---|---|---|---|---|---|---|
| electrolyte | REL / Ω | 36.8 | 34.0 | 34.2 | 34.8 | 35.5 | 38.5 | 43.4 | 47.3 | 53.3 |
| Anode | RSEI / Ω | 0.3 | 2.0 | 2.0 | 1.9 | 1.9 | 5.4 | 11.2 | 10.1 | 15.4 |
| Cathode | Rct / Ω | 28.5 | 48.0 | 54.4 | 58.5 | 62.1 | 72.6 | 76.7 | 82.9 | 106.9 |

| 1P-NCM | Parameter | 1st cycle | 2nd cycle | 3rd cycle | 4th cycle | 5th cycle | 10th cycle | 30th cycle | 50th cycle | 100th cycle |
|---|---|---|---|---|---|---|---|---|---|---|
| electrolyte | REL / Ω | 33.6 | 30.4 | 30.5 | 30.9 | 31.3 | 34.7 | 39.2 | 41.5 | 47.6 |
| Anode | RSEI / Ω | 0.2 | 2.3 | 2.6 | 3.3 | 3.0 | 3.4 | 10.1 | 12.5 | 14.8 |
| Cathode | Rct / Ω | 21.9 | 34.2 | 41.0 | 46.9 | 52.6 | 78.5 | 88.6 | 85.3 | 115.1 |

| Pristine NCM | Parameter | 1st cycle | 2nd cycle | 3rd cycle | 4th cycle | 5th cycle | 10th cycle | 30th cycle | 50th cycle | 100th cycle |
|---|---|---|---|---|---|---|---|---|---|---|
| electrolyte | REL / Ω | 36.7 | 37.6 | 37.6 | 38.1 | 38.7 | 41.6 | 47.0 | 55.0 | 60.0 |
| Anode | RSEI / Ω | 1.3 | 1.7 | 2.2 | 2.2 | 3.5 | 6.0 | 18.3 | 17.3 | 17.9 |
| Cathode | Rct / Ω | 19.2 | 34.3 | 44.5 | 53.3 | 61.9 | 87.2 | 106.3 | 118.0 | 173.0 |

Fig. 17

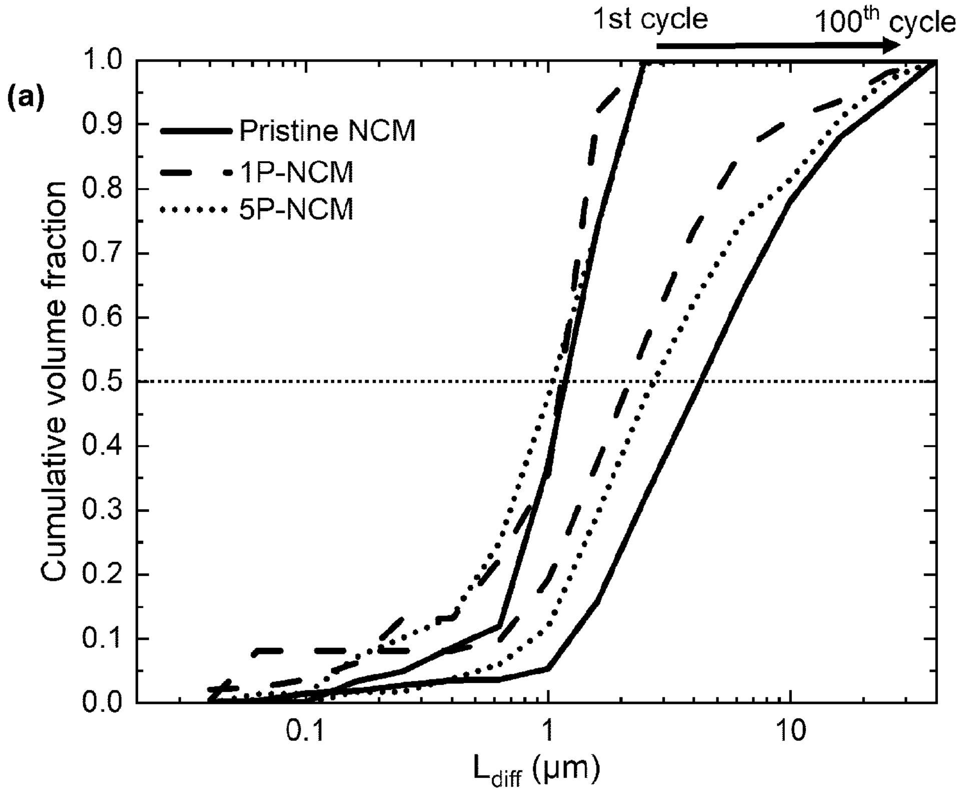
1st cycle
100th cycle
(a)
Pristine NCM
1P-NCM
5P-NCM
Cumulative volume fraction
1.0
0.9
0.8
0.7
0.6
0.5
0.4
0.3
0.2
0.1
0.0
0.1
1
10
Ldiff (μm)

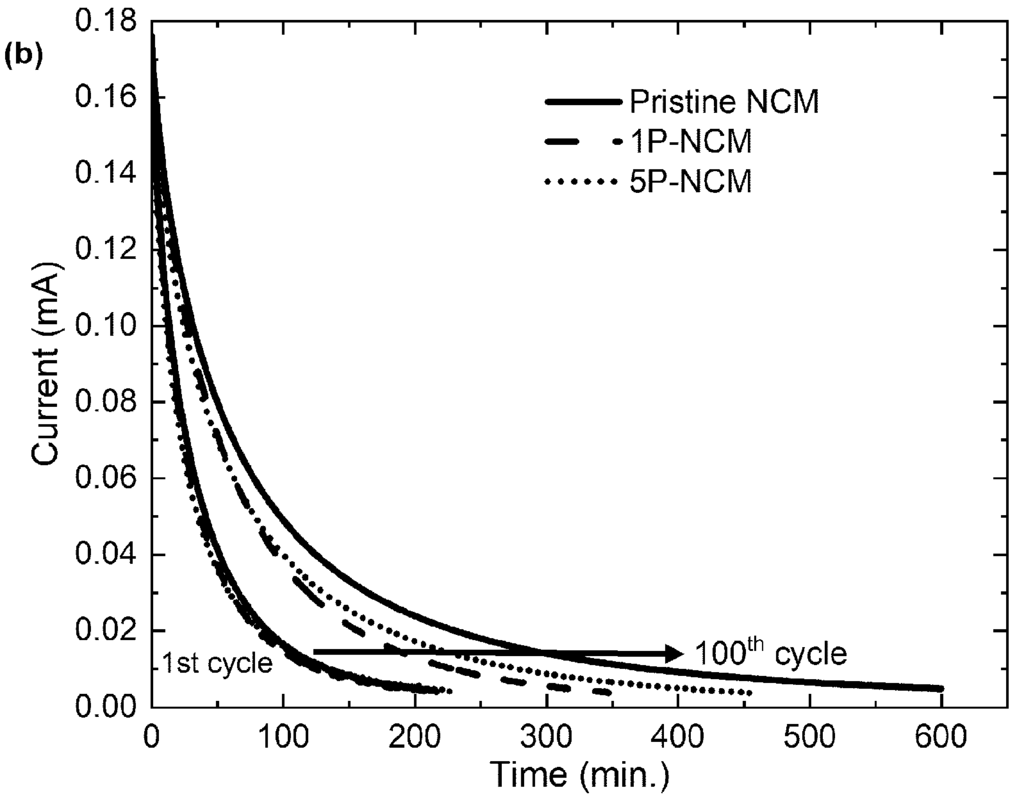
(b)
Pristine NCM
1P-NCM
5P-NCM
Current (mA)
0.18
0.16
0.14
0.12
0.10
0.08
0.06
0.04
0.02
0.00
1st cycle
100th cycle
0
100
200
300
400
500
600
Time (min.)

Fig. 18

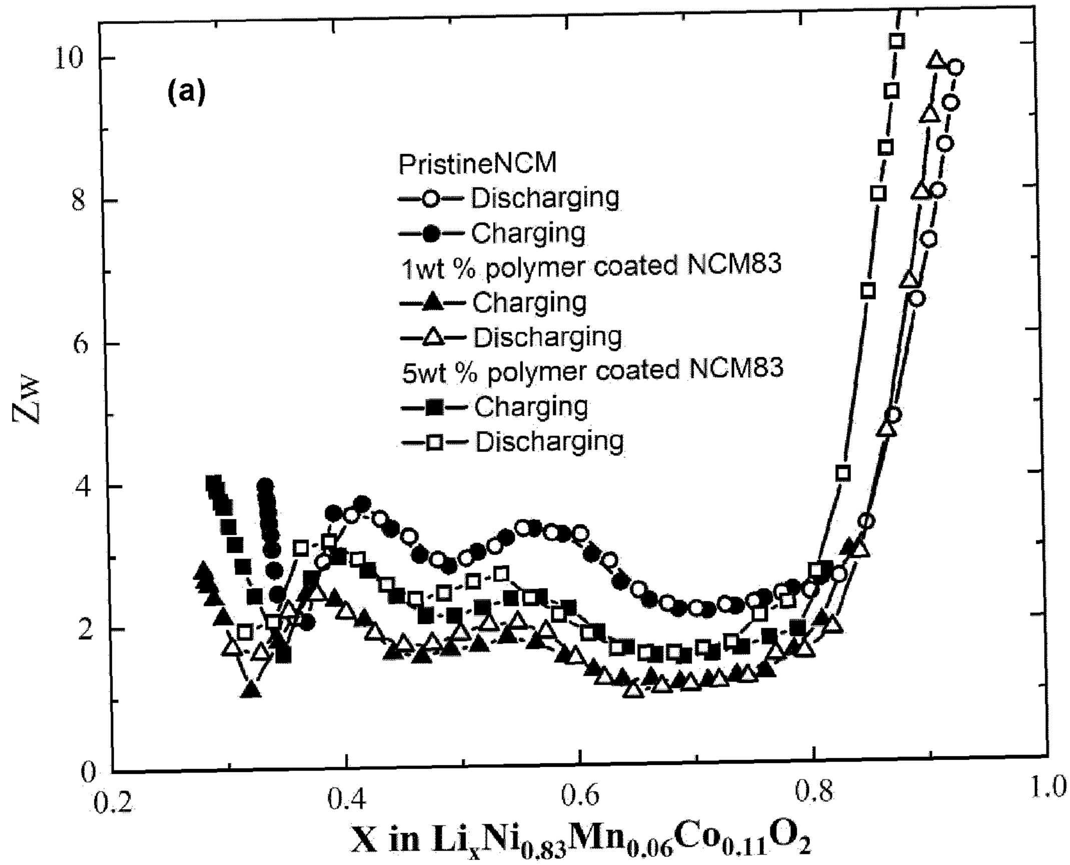
(a)
PristineNCM
Discharging
Charging
1wt % polymer coated NCM83
Charging
Discharging
5wt % polymer coated NCM83
Charging
Discharging
Zw
0
2
4
6
8
10
0.2
0.4
0.6
0.8
1.0
X in $Li_xNi_{0.83}Mn_{0.06}Co_{0.11}O_2$

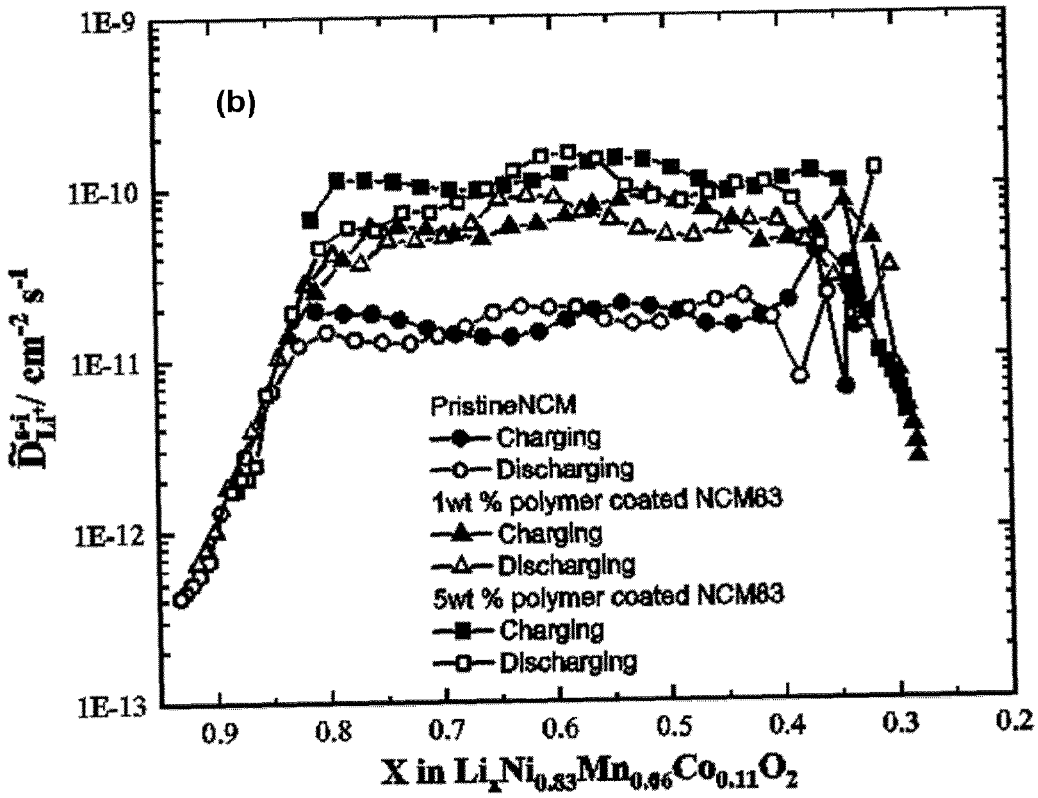
(b)
PristineNCM
Charging
Discharging
1wt % polymer coated NCM83
Charging
Discharging
5wt % polymer coated NCM83
Charging
Discharging
$\tilde{D}^{s-i}_{Li^+}$/ $cm^{-2} s^{-1}$
1E-9
1E-10
1E-11
1E-12
1E-13
0.9
0.8
0.7
0.6
0.5
0.4
0.3
0.2
X in $Li_xNi_{0.83}Mn_{0.06}Co_{0.11}O_2$

Europäisches Patentamt
European Patent Office
Office européen des brevets

# EUROPEAN SEARCH REPORT

Application Number
EP 22 19 9267

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | US 2022/069337 A1 (PHARES DENIS [US] ET AL) 3 March 2022 (2022-03-03)<br>* paragraphs [0045], [0062], [0100]; claims 1,13; figure 6 *<br>----- | 1,3,4,7,11,13-16<br>8 | INV.<br>H01M4/04<br>H01M4/131<br>H01M4/1391<br>H01M4/36<br>H01M4/485<br>H01M4/505<br>H01M4/525<br>H01M4/62<br>H01M10/0525<br>H01M10/0562<br>H01M10/0565<br>H01M10/0568<br>H01M10/0569 |
| X | WO 2021/254215 A1 (GUANGDONG HAOZHI TECH CO LIMITED [CN])<br>23 December 2021 (2021-12-23)<br>* paragraphs [0118], [0151], [0152], [0206]; claims 1,6,7; example 1 *<br>----- | 1,2,5,6,9,10,12,16 | |
| | | | TECHNICAL FIELDS SEARCHED (IPC) |
| | | | H01M |

The present search report has been drawn up for all claims

1

| Place of search | Date of completion of the search | Examiner |
|---|---|---|
| Munich | 14 March 2023 | Steinreiber, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
..................................................................
& : member of the same patent family, corresponding document

EPO FORM 1503 03.82 (P04C01)

## ANNEX TO THE EUROPEAN SEARCH REPORT ON EUROPEAN PATENT APPLICATION NO. EP 22 19 9267

This annex lists the patent family members relating to the patent documents cited in the above-mentioned European search report.
The members are as contained in the European Patent Office EDP file on
The European Patent Office is in no way liable for these particulars which are merely given for the purpose of information.

14-03-2023

| Patent document cited in search report | Publication date | Patent family member(s) | Publication date |
|---|---|---|---|
| US 2022069337 A1 | 03-03-2022 | AU 2021324693 A1 | 23-02-2023 |
| | | CA 3190158 A1 | 17-02-2022 |
| | | US 2022069337 A1 | 03-03-2022 |
| | | WO 2022035919 A1 | 17-02-2022 |
| WO 2021254215 A1 | 23-12-2021 | AU 2021291990 A1 | 09-02-2023 |
| | | CA 3183240 A1 | 23-12-2021 |
| | | CN 115023843 A | 06-09-2022 |
| | | CN 115023844 A | 06-09-2022 |
| | | CN 115053380 A | 13-09-2022 |
| | | CN 115053381 A | 13-09-2022 |
| | | CN 115336085 A | 11-11-2022 |
| | | CN 115568289 A | 03-01-2023 |
| | | CN 115668547 A | 31-01-2023 |
| | | CN 115668549 A | 31-01-2023 |
| | | EP 4118704 A1 | 18-01-2023 |
| | | EP 4143905 A1 | 08-03-2023 |
| | | KR 20230025412 A | 21-02-2023 |
| | | KR 20230025707 A | 22-02-2023 |
| | | KR 20230025806 A | 23-02-2023 |
| | | KR 20230027194 A | 27-02-2023 |
| | | KR 20230027206 A | 27-02-2023 |
| | | TW 202200394 A | 01-01-2022 |
| | | TW 202200396 A | 01-01-2022 |
| | | TW 202200397 A | 01-01-2022 |
| | | TW 202200398 A | 01-01-2022 |
| | | TW 202207506 A | 16-02-2022 |
| | | TW 202211523 A | 16-03-2022 |
| | | TW 202211525 A | 16-03-2022 |
| | | TW 202211529 A | 16-03-2022 |
| | | WO 2021253883 A1 | 23-12-2021 |
| | | WO 2021253884 A1 | 23-12-2021 |
| | | WO 2021253885 A1 | 23-12-2021 |
| | | WO 2021253886 A1 | 23-12-2021 |
| | | WO 2021253887 A1 | 23-12-2021 |
| | | WO 2021253888 A1 | 23-12-2021 |
| | | WO 2021254215 A1 | 23-12-2021 |
| | | WO 2021254218 A1 | 23-12-2021 |
| | | WO 2021254300 A1 | 23-12-2021 |

EPO FORM P0459

For more details about this annex : see Official Journal of the European Patent Office, No. 12/82